# EUROPEAN PATENT SPECIFICATION

(11) **EP 3 188 559 B1**
(45) Date of publication and mention of the grant of the patent: **10.04.2019**
(21) Application number: 14903156.9
(22) Date of filing: 30.09.2014
(51) Int. Cl.: H04W 72/12, H04W 4/00

(54) **DATA TRANSMISSION METHOD AND DEVICE**
DATENÜBERTRAGUNGSVERFAHREN UND -VORRICHTUNG
PROCÉDÉ ET DISPOSITIF DE TRANSMISSION DE DONNÉES

(43) Date of publication of application: 05.07.2017
(73) Proprietor: Huawei Technologies Co., Ltd., Longgang District Shenzhen, Guangdong 518129 (CN)
(72) Inventor: TANG, Zhenfei, Shenzhen Guangdong 518129 (CN); GUO, Fangfu, Shenzhen Guangdong 518129 (CN); WU, Ning, Shenzhen Guangdong 518129 (CN)
(74) Representative: Gill Jennings & Every LLP
(86) International application number: PCT/CN2014/088004
(87) International publication number: WO 2016/049890

(56) References cited:
- EP-A1- 2 675 081
- WO-A1-2010/117311
- CN-A- 101 715 237
- CN-A- 102 158 932
- CN-A- 102 685 895
- US-A1- 2007 201 397
- US-A1- 2013 163 537
- "3rd Generation Partnership Project; Technical Specification Group Radio Access Network; Evolved Universal Terrestrial Radio Access (E-UTRA); Physical layer procedures (Release 12)", 3GPP STANDARD; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V12.3.0, 26 September 2014 (2014-09-26), pages 1-212, XP050926112, [retrieved on 2014-09-26]

## Description

### TECHNICAL FIELD

The present invention relates to the field of wireless communications technologies, and in particular, to a data transmission method and device.

### BACKGROUND

With development of mobile Internet technologies, a long term evolution (LTE for short) network gradually replaces cellular technologies such as the global system for mobile communications (English: Global System for Mobile Communications, GSM for short) and a wideband code division multiple access access system (WCDMA for short), and is widely deployed. However, with development of technologies such as the Internet of Things, machine-to-machine (M2M for short) communication attracts increasing attention from the industry.

For example, in an application scenario of home meter reading, a terminal that has an M2M function periodically sends a small data packet to a base station device, and sensitivity to a service delay is relatively low. However, in an application scenario of industrial device status monitoring, it is required that a terminal that has an M2M function can quickly report detected status data, so that a response can be made quickly. That is, in the application scenario of industrial device status monitoring, end-to-end data transmission is highly delay-sensitive, and in this case, a data transmission system is required to have a shortest data transmission delay.

In a current communications system, end-to-end data transmission delays include a wired network processing delay, a line transmission delay, a wireless air interface processing delay, transmission delay, and the like. However, how to reduce the end-to-end data transmission delay becomes an urgent problem to be resolved.

US 20070201397 relates to wireless communication method and apparatus for selecting between transmission of short-version and full-version uplink scheduling requests.

### SUMMARY

In view of this, embodiments of the present invention provide a data transmission method and device, to reduce an end-to-end data transmission delay.

In particular, the present invention provides a terminal according to claim 1, a base station according to claim 4, data transmission methods according to claims 7 and 10 and a computer program product according to claim 13. Embodiments of the invention are claimed in the dependent claims. According to a first aspect,
a data transmission device is provided, and the data transmission device is user equipment and includes:
a sending module, configured to: when uplink data needs to be sent to a base station, send control information to the base station by using an uplink transmission resource, where the control information is used to request the base station to perform uplink scheduling for the to-be-sent data of the user equipment; and
a receiving module, configured to receive uplink scheduling information that is returned by the base station for the control information sent by the sending module; where
the sending module is further configured to send the uplink data to the base station by using the uplink scheduling information received by the receiving module.

With reference to the first aspect of the present invention, in a first possible implementation manner, the control information includes a buffer status report BSR, and the uplink transmission resource includes a physical uplink control channel PUCCH; and
the sending module is specifically configured to send the BSR to the base station by using the PUCCH.

With reference to the first possible implementation manner of the first aspect, in a second possible implementation manner, the sending module is specifically configured to: when a physical resource block occupied by the PUCCH used to send the BSR is the same as a physical resource block occupied by a PUCCH used to send channel state information CSI, if it is found that a transmission conflict occurs between sending of the BSR and sending of the CSI, preferentially send, according to specified sending priorities of sending the BSR and sending the CSI, the BSR/CSI with a higher sending priority to the base station by using the PUCCH; or
when a physical resource block occupied by the PUCCH used to send the BSR is the same as a physical resource block occupied by a PUCCH used to send an acknowledgement/a negative acknowledgement ACK/NACK, if it is found that a transmission conflict occurs between sending of the BSR and sending of the ACK/NACK, preferentially send, according to specified sending priorities of sending the BSR and sending the ACK/NACK, the BSR/ACK/NACK with a higher sending priority to the base station by using the PUCCH.

With reference to the first possible implementation manner of the first aspect of the present invention or with reference to the second possible implementation manner of the first aspect, in a third possible implementation manner, the PUCCH includes at least one or more of a second-format physical uplink control channel Format2_PUCCH or a third-format physical uplink control channel Format3_PUCCH.

With reference to the third possible implementation manner of the first aspect in a fourth possible implementation manner, the sending module is further configured to: when sending the BSR to the base station by using the Format3_PUCCH, send, by using the Format3_PUCCH, a packet handling report PHR to the base station if an idle bit exists in a physical resource block corresponding to the Format3_PUCCH.

With reference to the first aspect of the present invention, in a fifth possible implementation manner, the control information includes a buffer status report BSR, and the uplink transmission resource includes common uplink scheduling information;
the receiving module is further configured to receive the common uplink scheduling information configured by the base station, where the common uplink scheduling information includes a common physical uplink shared channel PUSCH, and the common PUSCH is used to represent a PUSCH that can be shared by multiple user equipments; and
the sending module is specifically configured to send the BSR and a cell radio network temporary identifier C-RNTI of the user equipment to the base station by using the common uplink scheduling information received by the receiving module.

With reference to the fifth possible implementation manner of the first aspect, in a sixth possible implementation manner, the receiving module is further configured to receive a group radio network temporary identifier G-RNTI configured by the base station, where the G-RNTI represents an RNTI that is configured by the base station and that is corresponding to the common uplink scheduling information shared by multiple user equipments; and
the receiving module is specifically configured to: receive, on a scrambled physical downlink control channel PDCCH, the uplink scheduling information that is sent by the base station and is for the control information;
descramble the scrambled PDCCH by using the G-RNTI;
when the scrambled PDCCH is successfully received, obtain downlink scheduling information from the scrambled PDCCH, where the downlink scheduling information indicates a physical downlink shared channel PDSCH that carries uplink scheduling information and a C-RNTI of target user equipment that uses the uplink scheduling information; and
when it is determined that the C-RNTI that is carried on the PDSCH and is of the target user equipment that uses the uplink scheduling information is the same as the C-RNTI of the user equipment, determine that the uplink scheduling information carried on the PDSCH is the uplink scheduling information of the user equipment.

With reference to the fifth possible implementation manner of the first or with reference to the sixth possible implementation manner of the first aspect, in a seventh possible implementation manner, the receiving module is specifically configured to: obtain, on the scrambled PDCCH, the common uplink scheduling information sent by the base station, where the scrambled PDCCH is obtained after the base station scrambles, by using the G-RNTI, the PDCCH; or
receive radio resource control RRC signaling sent by the base station, where the RRC signaling carries the common uplink scheduling information; or
receive a system message sent by the base station, where the system message carries the common uplink scheduling information.

With reference to the first aspect of the present invention, with reference to the first possible implementation manner of the first, with reference to the second possible implementation manner of the first aspect of the present invention, with reference to the third possible implementation manner of the first aspect of the present invention, with reference to the fourth possible implementation manner of the first aspect of the present invention, or with reference to the fifth possible implementation manner of the first aspect of the present invention, in an eighth possible implementation manner, the receiving module is specifically configured to: receive, on a scrambled physical downlink control channel PDCCH, the uplink scheduling information that is sent by the base station and is for the control information;
descramble the scrambled PDCCH by using the cell radio network temporary identifier C-RNTI of the user equipment; and
when the scrambled PDCCH is successfully received, obtain the uplink scheduling information carried on the scrambled PDCCH.

According to a second aspect,
a data transmission device is provided, and the data transmission device is a base station device and includes:
a receiving module, configured to receive control information that is sent by user equipment by using an uplink transmission resource, where the control information is used to request the base station to perform uplink scheduling for to-be-sent data of the user equipment; and
a sending module, configured to send uplink scheduling information for the control information to the user equipment according to the control information received by the receiving module; where
the receiving module is further configured to receive the uplink data that is sent by the user equipment by using the uplink scheduling information.

With reference to the second aspect, in a first possible implementation manner, the receiving module is specifically configured to receive, on a physical uplink control channel PUCCH, the control information sent by the user equipment, where the control information includes a buffer status report BSR.

With reference to the second aspect, in a second possible implementation manner, the sending module is further configured to configure common uplink scheduling information for the user equipment; and
the receiving module is specifically configured to receive the control information and a cell radio network temporary identifier C-RNTI of the user equipment that are sent by the user equipment by using the common uplink scheduling information, where the control information includes a buffer status report BSR.

With reference to the second possible implementation manner of the second aspect, in a third possible implementation manner, the sending module is further configured to configure a group radio network temporary identifier G-RNTI for the user equipment, where the G-RNTI represents an RNTI that is configured by the base station and that is corresponding to the common uplink scheduling information shared by multiple user equipments; and
the sending module is specifically configured to: scramble a physical downlink control channel PDCCH by using the G-RNTI, and configure the common uplink scheduling information for the user equipment by using the scrambled PDCCH; or
send radio resource control RRC signaling to the user equipment, where the RRC signaling carries the common uplink scheduling information; or
send a system message to the user equipment, where the system message carries the common uplink scheduling information.

With reference to the second possible implementation manner of the second aspect or with reference to the third possible implementation manner of the second aspect, in a fourth possible implementation manner, the sending module is specifically configured to: allocate the uplink scheduling information to the user equipment according to the control information;
add the uplink scheduling information and the C-RNTI of the user equipment to a physical downlink shared channel PDSCH indicated in downlink scheduling information; and
scramble, by using the G-RNTI, the physical downlink control channel PDCCH that carries the downlink scheduling information, and send the scrambled PDCCH to the user equipment, where the downlink scheduling information includes the PDSCH.

With reference to the second aspect, with reference to the first possible implementation manner of the second aspect of the present invention, with reference to the second possible implementation manner of the second aspect of the present invention, or with reference to the third possible implementation manner of the second aspect of the present invention, in a fifth possible implementation manner, the sending module is specifically configured to: allocate the uplink scheduling information to the user equipment according to the control information; and
scramble, by using the C-RNTI of the user equipment, the physical downlink control channel PDCCH that carries the uplink scheduling information, and send the scrambled PDCCH to the user equipment.

According to a third aspect, a data transmission device is provided, and the data transmission device is user equipment and includes:
an obtaining module, configured to obtain common uplink scheduling information configured by a base station, where the common uplink scheduling information includes a common physical uplink shared channel PUSCH, and the common PUSCH is used to represent a PUSCH that can be shared by multiple user equipments; and
a sending module, configured to: when uplink data needs to be sent to the base station, send the uplink data and uplink control information to the base station by using the common uplink scheduling information obtained by the obtaining module, where the uplink control information includes a cell radio network temporary identifier C-RNTI of the user equipment.

With reference to the third aspect of the present invention, in a first possible implementation manner, the data transmission device further includes:
a determining module, configured to: before the uplink data and the cell radio network temporary identifier C-RNTI of the user equipment are sent to the base station, determine that uplink data other than the uplink data further needs to be sent; and
the sending module is specifically configured to send the uplink data, a buffer status report BSR, and the uplink control information to the base station by using the common uplink scheduling information, where the BSR is used to represent buffer information which indicates that there is also the uplink data that needs to be sent other than the uplink data that is already sent.

With reference to the third aspect or with reference to the first possible implementation manner of the third aspect,
in a second possible implementation manner, the data transmission device further includes:
a receiving module, configured to: receive acknowledgement/negative acknowledgement information sent by the base station, and determine, according to the acknowledgement/negative acknowledgement information, whether the uplink data needs to be sent to the base station again.

With reference to the second possible implementation manner of the third aspect, in a third possible implementation manner, the receiving module is specifically configured to: receive, on a scrambled PDCCH, downlink scheduling information sent by the base station, and when the scrambled PDCCH is descrambled by using a G-RNTI and is successfully received, and when it is determined that a C-RNTI carried on a PDSCH indicated in the downlink scheduling information is the same as the C-RNTI of the user equipment, obtain, on the PDSCH indicated in the downlink scheduling information, the acknowledgement/negative acknowledgement information sent by the base station; or
receive, by using a scrambled PDCCH, downlink scheduling information sent by the base station, and when the scrambled PDCCH is descrambled by using the C-RNTI and is successfully received, obtain, on a PDSCH indicated in the downlink scheduling information, the acknowledgement/negative acknowledgement information sent by the base station; or
receive a physical HARQ indicator channel PHICH sent by the base station, and when it is determined that a C-RNTI corresponding to the PHICH is the same as the C-RNTI of the user equipment, obtain, from the PHICH, the acknowledgement/negative acknowledgement information sent by the base station.

According to a fourth aspect,
a data transmission device is provided, and the data transmission device is a base station device and includes:
a sending module, configured to configure common uplink scheduling information for user equipment, where the common uplink scheduling information includes a common physical uplink shared channel PUSCH, and the common PUSCH is used to represent a PUSCH that can be shared by multiple user equipments; and
a receiving module, configured to receive uplink data and uplink control information that are sent by the user equipment by using the common uplink scheduling information, where the uplink control information includes a cell radio network temporary identifier C-RNTI of the user equipment.

According to a fifth aspect, a data transmission device is provided and includes:
a signal transmitter, configured to: when uplink data needs to be sent to a base station, send control information to the base station by using an uplink transmission resource, where the control information is used to request the base station to perform uplink scheduling for the to-be-sent data of the user equipment; and
a signal receiver, configured to receive uplink scheduling information that is returned by the base station for the control information; where
the signal transmitter is further configured to send the uplink data to the base station by using the uplink scheduling information.

With reference to the fifth aspect, in a first possible implementation manner, the control information includes a buffer status report BSR, and the uplink transmission resource includes a physical uplink control channel PUCCH; and
the signal transmitter is specifically configured to send the BSR to the base station by using the PUCCH.

With reference to the first possible implementation manner of the fifth aspect, in a second possible implementation manner, the signal transmitter is specifically configured to: when a physical resource block occupied by the PUCCH used to send the BSR is the same as a physical resource block occupied by a PUCCH used to send channel state information CSI, if it is found that a transmission conflict occurs between sending of the BSR and sending of the CSI, preferentially send, according to specified sending priorities of sending the BSR and sending the CSI, the BSR/CSI with a higher sending priority to the base station by using the PUCCH; or
when a physical resource block occupied by the PUCCH used to send the BSR is the same as a physical resource block occupied by a PUCCH used to send an acknowledgement/a negative acknowledgement ACK/NACK, if it is found that a transmission conflict occurs between sending of the BSR and sending of the ACK/NACK, preferentially send, according to specified sending priorities of sending the BSR and sending the ACK/NACK, the BSR/ACK/NACK with a higher sending priority to the base station by using the PUCCH.

With reference to the first possible implementation manner of the fifth aspect or with reference to the second possible implementation manner of the fifth aspect, in a third possible implementation manner, the PUCCH includes at least one or more of a second-format physical uplink control channel Format2_PUCCH or a third-format physical uplink control channel Format3_PUCCH.

With reference to the third possible implementation manner of the fifth aspect, in a fourth possible implementation manner, the signal transmitter is further configured to: when sending the BSR to the base station by using the Format3_PUCCH, send, by using the Format3_PUCCH, a packet handling report PHR to the base station if an idle bit exists in a physical resource block corresponding to the Format3_PUCCH.

With reference to the fifth aspect, in a fifth possible implementation manner, the control information includes a buffer status report BSR, and the uplink transmission resource includes common uplink scheduling information;
the signal receiver is further configured to receive the common uplink scheduling information configured by the base station, where the common uplink scheduling information includes a common physical uplink shared channel PUSCH, and the common PUSCH is used to represent a PUSCH that can be shared by multiple user equipments; and
the signal transmitter is configured to send the BSR and a cell radio network temporary identifier C-RNTI of the user equipment to the base station by using the common uplink scheduling information.

With reference to the fifth possible implementation manner of the fifth aspect, in a sixth possible implementation manner, the signal receiver is further configured to receive a group radio network temporary identifier G-RNTI configured by the base station, where the G-RNTI represents an RNTI that is configured by the base station and that is corresponding to the common uplink scheduling information shared by multiple user equipments; and
that the signal receiver is specifically configured to receive the uplink scheduling information that is returned by the base station for the control information specifically includes:
receiving, on a scrambled physical downlink control channel PDCCH, the uplink scheduling information that is sent by the base station and is for the control information;
descrambling the scrambled PDCCH by using the G-RNTI;
when the scrambled PDCCH is successfully received, obtaining downlink scheduling information from the scrambled PDCCH, where the downlink scheduling information indicates a physical downlink shared channel PDSCH that carries uplink scheduling information and a C-RNTI of target user equipment that uses the uplink scheduling information; and
when the user equipment determines that the C-RNTI that is carried on the PDSCH and is of the target user equipment that uses the uplink scheduling information is the same as the C-RNTI of the user equipment, determining that the uplink scheduling information carried on the PDSCH is the uplink scheduling information of the user equipment.

With reference to the fifth possible implementation manner of the fifth aspect or with reference to the sixth possible implementation manner, in a seventh possible implementation manner, that the signal receiver is specifically configured to obtain the common uplink scheduling information sent by the base station specifically includes: obtaining, on the scrambled PDCCH, the common uplink scheduling information sent by the base station, where the scrambled PDCCH is obtained after the base station scrambles, by using the G-RNTI, the PDCCH; or
receiving radio resource control RRC signaling sent by the base station, where the RRC signaling carries the common uplink scheduling information; or
receiving a system message sent by the base station, where the system message carries the common uplink scheduling information.

With reference to the fifth aspect, with reference to the first possible implementation manner of the fifth aspect, with reference to the second possible implementation manner of the fifth aspect of the present invention, with reference to the third possible implementation manner of the fifth aspect of the present invention, with reference to the fourth possible implementation manner of the fifth aspect of the present invention, or with reference to the fifth possible implementation manner of the fifth aspect of the present invention, in an eighth possible implementation manner, that the signal receiver is specifically configured to receive the uplink scheduling information that is returned by the base station for the control information specifically includes:
receiving, on a scrambled physical downlink control channel PDCCH, the uplink scheduling information that is sent by the base station and is for the control information;
descrambling the scrambled PDCCH by using the cell radio network temporary identifier C-RNTI of the user equipment; and
when the scrambled PDCCH is successfully received, obtaining the uplink scheduling information carried on the scrambled PDCCH.

According to a sixth aspect, a data transmission device is provided and includes:
a signal receiver, configured to receive control information that is sent by user equipment by using an uplink transmission resource, where the control information is used to request the base station to perform uplink scheduling for to-be-sent data of the user equipment; and
a signal transmitter, configured to send uplink scheduling information for the control information to the user equipment according to the control information; where
the signal receiver is further configured to receive the uplink data that is sent by the user equipment by using the uplink scheduling information.

With reference to the sixth aspect, in a first possible implementation manner, the signal receiver is specifically configured to receive, on a physical uplink control channel PUCCH, the control information sent by the user equipment, where the control information includes a buffer status report BSR.

With reference to the sixth aspect of the present invention, in a second possible implementation manner, the signal transmitter is further configured to configure common uplink scheduling information for the user equipment; and
the signal receiver is specifically configured to receive the control information and a cell radio network temporary identifier C-RNTI of the user equipment that are sent by the user equipment by using the common uplink scheduling information, where the control information includes a buffer status report BSR.

With reference to the second possible implementation manner of the sixth aspect, in a third possible implementation manner, the signal transmitter is further configured to configure a group radio network temporary identifier G-RNTI for the user equipment, where the G-RNTI represents an RNTI that is configured by the base station and that is corresponding to the common uplink scheduling information shared by multiple user equipments; and
that the signal transmitter is configured to configure the common uplink scheduling information for the user equipment specifically includes:
scrambling a physical downlink control channel PDCCH by using the G-RNTI, and configuring the common uplink scheduling information for the user equipment by using the scrambled PDCCH; or
sending radio resource control RRC signaling to the user equipment, where the RRC signaling carries the common uplink scheduling information; or
sending a system message to the user equipment, where the system message carries the common uplink scheduling information.

With reference to the second possible implementation manner of the sixth aspect or with reference to the third possible implementation manner of the sixth aspect, in a fourth possible implementation manner, the signal transmitter is specifically configured to: allocate the uplink scheduling information to the user equipment according to the control information;
carry the uplink scheduling information and the C-RNTI of the user equipment on a physical downlink shared channel PDSCH indicated in downlink scheduling information; and
scramble, by using the G-RNTI, the physical downlink control channel PDCCH that carries the downlink scheduling information, and send the scrambled PDCCH to the user equipment, where the downlink scheduling information includes the PDSCH.

With reference to the sixth aspect,
with reference to the first possible implementation manner of the sixth aspect of the present invention, with reference to the second possible implementation manner of the sixth aspect of the present invention, or with reference to the third possible implementation manner of the sixth aspect of the present invention, in a fifth possible implementation manner, the signal transmitter is specifically configured to: allocate the uplink scheduling information to the user equipment according to the control information; and
scramble, by using the C-RNTI of the user equipment, the physical downlink control channel PDCCH that carries the uplink scheduling information, and send the scrambled PDCCH to the user equipment.

According to a seventh aspect, a data transmission device is provided and includes:
a signal receiver, configured to obtain common uplink scheduling information configured by a base station, where the common uplink scheduling information includes a common physical uplink shared channel PUSCH, and the common PUSCH is used to represent a PUSCH that can be shared by multiple user equipments; and
a signal transmitter, configured to: when uplink data needs to be sent to the base station, send the uplink data and uplink control information to the base station by using the common uplink scheduling information, where the uplink control information includes a cell radio network temporary identifier C-RNTI of the user equipment.

With reference to the seventh aspect, in a first possible implementation manner, the data transmission device further includes:
a processor, configured to: before the uplink data and the cell radio network temporary identifier C-RNTI of the user equipment are sent to the base station, determine that uplink data other than the uplink data further needs to be sent; and
the signal transmitter is specifically configured to send the uplink data, a buffer status report BSR, and the uplink control information to the base station by using the common uplink scheduling information, where the BSR is used to represent buffer information which indicates that there is also the uplink data that needs to be sent other than the uplink data that is already sent.

With reference to the seventh aspect or with reference to the first possible implementation manner of the seventh aspect, in a second possible implementation manner, the signal receiver is further configured to: receive acknowledgement/negative acknowledgement information sent by the base station; and
determine, according to the acknowledgement/negative acknowledgement information, whether the uplink data needs to be sent to the base station again.

With reference to the second possible implementation manner of the seventh aspect, in a third possible implementation manner, the signal receiver is specifically configured to: receive, on a scrambled PDCCH, downlink scheduling information sent by the base station, and when the scrambled PDCCH is descrambled by using a G-RNTI and is successfully received, and when it is determined that a C-RNTI carried on a PDSCH indicated in the downlink scheduling information is the same as the C-RNTI of the user equipment, obtain, on the PDSCH indicated in the downlink scheduling information, the acknowledgement/negative acknowledgement information sent by the base station; or
receive, by using a scrambled PDCCH, downlink scheduling information sent by the base station, and when the scrambled PDCCH is descrambled by using the C-RNTI and is successfully received, obtain, on a PDSCH indicated in the downlink scheduling information, the acknowledgement/negative acknowledgement information sent by the base station; or
receive a physical HARQ indicator channel PHICH sent by the base station, and when it is determined that a C-RNTI corresponding to the PHICH is the same as the C-RNTI of the user equipment, obtain, from the PHICH, the acknowledgement/negative acknowledgement information sent by the base station.

According to an eighth aspect, a data transmission device is provided and includes:
a signal transmitter, configured to configure common uplink scheduling information for user equipment, where the common uplink scheduling information includes a common physical uplink shared channel PUSCH, and the common PUSCH is used to represent a PUSCH that can be shared by multiple user equipments; and
a signal receiver, configured to receive uplink data and uplink control information that are sent by the user equipment by using the common uplink scheduling information, where the uplink control information includes a cell radio network temporary identifier C-RNTI of the user equipment.

According to a ninth aspect, a data transmission method is provided and includes:
sending, by user equipment when needing to send uplink data to a base station, control information to the base station by using an uplink transmission resource, where the control information is used to request the base station to perform uplink scheduling for the to-be-sent data of the user equipment;
receiving, by the user equipment, uplink scheduling information that is returned by the base station for the control information; and
sending, by the user equipment, the uplink data to the base station by using the uplink scheduling information.

With reference to the ninth aspect of the present invention, in a first possible implementation manner, the control information includes a buffer status report BSR, and the uplink transmission resource includes a physical uplink control channel PUCCH; and
the sending control information to the base station by using an uplink transmission resource includes:
sending, by the user equipment, the BSR to the base station by using the PUCCH.

With reference to the first possible implementation manner of the ninth aspect, in a second possible implementation manner, the sending, by the user equipment, the BSR to the base station by using the PUCCH includes:
when a physical resource block occupied by the PUCCH used to send the BSR is the same as a physical resource block occupied by a PUCCH used to send channel state information CSI, if it is found that a transmission conflict occurs between sending of the BSR and sending of the CSI, preferentially sending, by the user equipment according to specified sending priorities of sending the BSR and sending the CSI, the BSR/CSI with a higher sending priority to the base station by using the PUCCH; or
when a physical resource block occupied by the PUCCH used to send the BSR is the same as a physical resource block occupied by a PUCCH used to send an acknowledgement/a negative acknowledgement ACK/NACK, if it is found that a transmission conflict occurs between sending of the BSR and sending of the ACK/NACK, preferentially sending, according to specified sending priorities of sending the BSR and sending the ACK/NACK, the BSR/ACK/NACK with a higher sending priority to the base station by using the PUCCH.

With reference to the first possible implementation manner of the ninth aspect or with reference to the second possible implementation manner of the ninth aspect, in a third possible implementation manner, the PUCCH includes at least one or more of a second-format physical uplink control channel Format2_PUCCH or a third-format physical uplink control channel Format3_PUCCH.

With reference to the third possible implementation manner of the ninth aspect, in a fourth possible implementation manner, the method further includes:
when sending the BSR to the base station by using the Format3_PUCCH, sending, by the user equipment by using the Format3_PUCCH, a packet handling report PHR to the base station if an idle bit exists in a physical resource block corresponding to the Format3_PUCCH.

With reference to the ninth aspect, in a fifth possible implementation manner, the control information includes a buffer status report BSR, and the uplink transmission resource includes common uplink scheduling information; and
the sending control information to the base station by using an uplink transmission resource includes:
receiving, by the user equipment, the common uplink scheduling information configured by the base station, where the common uplink scheduling information includes a common physical uplink shared channel PUSCH, and the common PUSCH is used to represent a PUSCH that can be shared by multiple user equipments; and
sending, by the user equipment, the BSR and a cell radio network temporary identifier C-RNTI of the user equipment to the base station by using the common uplink scheduling information.

With reference to the fifth possible implementation manner of the ninth aspect of the present invention, in a sixth possible implementation manner, the method further includes:
receiving, by the user equipment, a group radio network temporary identifier G-RNTI configured by the base station, where the G-RNTI represents an RNTI that is configured by the base station and that is corresponding to the common uplink scheduling information shared by multiple user equipments; and
the receiving, by the user equipment, uplink scheduling information that is returned by the base station for the control information includes:
   receiving, by the user equipment on a scrambled physical downlink control channel PDCCH, the uplink scheduling information that is sent by the base station and is for the control information;
   descrambling, by the user equipment, the scrambled PDCCH by using the G-RNTI;
   when successfully receiving the scrambled PDCCH, obtaining, by the user equipment, downlink scheduling information from the scrambled PDCCH, where the downlink scheduling information indicates a physical downlink shared channel PDSCH that carries uplink scheduling information and a C-RNTI of target user equipment that uses the uplink scheduling information; and
   when determining that the C-RNTI that is carried on the PDSCH and is of the target user equipment that uses the uplink scheduling information is the same as the C-RNTI of the user equipment, determining, by the user equipment, that the uplink scheduling information carried on the PDSCH is the uplink scheduling information of the user equipment.

With reference to the fifth possible implementation manner of the ninth aspect or with reference to the sixth possible implementation manner of the ninth aspect, in a seventh possible implementation manner, the obtaining, by the user equipment, the common uplink scheduling information sent by the base station includes:
obtaining, by the user equipment on the scrambled PDCCH, the common uplink scheduling information sent by the base station, where the scrambled PDCCH is obtained after the base station scrambles, by using the G-RNTI, the PDCCH; or
receiving, by the user equipment, radio resource control RRC signaling sent by the base station, where the RRC signaling carries the common uplink scheduling information; or
receiving, by the user equipment, a system message sent by the base station, where the system message carries the common uplink scheduling information.

With reference to the ninth aspect, with reference to the first possible implementation manner of the ninth aspect of the present invention, with reference to the second possible implementation manner of the ninth aspect of the present invention, with reference to the third possible implementation manner of the ninth aspect of the present invention, with reference to the fourth possible implementation manner of the ninth aspect of the present invention, or with reference to the fifth possible implementation manner of the ninth aspect of the present invention, in an eighth possible implementation manner, the receiving, by the user equipment, uplink scheduling information that is returned by the base station for the control information includes:
receiving, by the user equipment on a scrambled physical downlink control channel PDCCH, the uplink scheduling information that is sent by the base station and is for the control information;
descrambling, by the user equipment, the scrambled PDCCH by using the cell radio network temporary identifier C-RNTI of the user equipment; and
when successfully receiving the scrambled PDCCH, obtaining, by the user equipment, the uplink scheduling information carried on the scrambled PDCCH.

According to a tenth aspect of the present invention, a data transmission method is provided and includes:
receiving, by a base station, control information that is sent by user equipment by using an uplink transmission resource, where the control information is used to request the base station to perform uplink scheduling for to-be-sent data of the user equipment;
sending, by the base station, uplink scheduling information for the control information to the user equipment according to the control information; and
receiving, by the base station, the uplink data that is sent by the user equipment by using the uplink scheduling information.

With reference to the tenth aspect,
in a first possible implementation manner, the receiving, by a base station, control information that is sent by user equipment by using an uplink transmission resource includes:
receiving, by the base station on a physical uplink control channel PUCCH, the control information sent by the user equipment, where the control information includes a buffer status report BSR.

With reference to the tenth aspect, in a second possible implementation manner, the method further includes:
configuring, by the base station, common uplink scheduling information for the user equipment; and
the receiving, by a base station, control information that is sent by user equipment by using an uplink transmission resource includes:
   receiving, by the base station, the control information and a cell radio network temporary identifier C-RNTI of the user equipment that are sent by the user equipment by using the common uplink scheduling information, where the control information includes a buffer status report BSR.

With reference to the second possible implementation manner of the tenth aspect, in a third possible implementation manner, the method further includes:
configuring, by the base station, a group radio network temporary identifier G-RNTI for the user equipment, where the G-RNTI represents an RNTI that is configured by the base station and that is corresponding to the common uplink scheduling information shared by multiple user equipments; and
the sending, by the base station, common uplink scheduling information for the user equipment includes:
   scrambling, by the base station, a physical downlink control channel PDCCH by using the G-RNTI, and configuring the common uplink scheduling information for the user equipment by using the scrambled PDCCH; or
   sending, by the base station, radio resource control RRC signaling to the user equipment, where the RRC signaling carries the common uplink scheduling information; or
   sending, by the base station, a system message to the user equipment, where the system message carries the common uplink scheduling information.

With reference to the second possible implementation manner of the tenth aspect or with reference to the third possible implementation manner of the tenth aspect, in a fourth possible implementation manner, the sending, by the base station, uplink scheduling information for the control information to the user equipment according to the control information includes:
allocating, by the base station, the uplink scheduling information to the user equipment according to the control information;
carrying, by the base station, the uplink scheduling information and the C-RNTI of the user equipment on a physical downlink shared channel PDSCH indicated in downlink scheduling information; and
scrambling, by using the G-RNTI, the physical downlink control channel PDCCH that carries the downlink scheduling information, and sending the scrambled PDCCH to the user equipment, where the downlink scheduling information includes the PDSCH.

With reference to the tenth aspect, with reference to the first possible implementation manner of the tenth aspect of the present invention, with reference to the second possible implementation manner of the tenth aspect of the present invention, or with reference to the third possible implementation manner of the tenth aspect of the present invention, in a fifth possible implementation manner, the sending, by the base station, uplink scheduling information for the control information to the user equipment according to the control information includes:
allocating, by the base station, the uplink scheduling information to the user equipment according to the control information; and
scrambling, by the base station by using the C-RNTI of the user equipment, the physical downlink control channel PDCCH that carries the uplink scheduling information, and sending the scrambled PDCCH to the user equipment.

In the aspects of the present disclosure, when needing to send uplink data to a base station, user equipment sends control information to the base station by using an uplink transmission resource, where the control information is used to request the base station to perform uplink scheduling for the to-be-sent data of the user equipment; receives uplink scheduling information that is returned by the base station for the control information; and sends the uplink data to the base station by using the uplink scheduling information. In this way, when user equipment needs to send uplink data to a base station, but the base station has not triggered uplink scheduling for the to-be-sent data of the user equipment, the user equipment directly sends control information by using an uplink transmission resource, quickly obtains uplink scheduling information from the base station, and sends the uplink data to the base station by using the uplink scheduling information. This can simplify a procedure for sending control information between the user equipment and the base station, so that a data transmission delay is reduced, and system performance is improved.

According to an eleventh aspect, a data transmission method is provided and includes:
obtaining, by user equipment, common uplink scheduling information configured by a base station, where the common uplink scheduling information includes a common physical uplink shared channel PUSCH, and the common PUSCH is used to represent a PUSCH that can be shared by multiple user equipments; and
sending, by the user equipment when needing to send uplink data to the base station, the uplink data and uplink control information to the base station by using the common uplink scheduling information, where the uplink control information includes a cell radio network temporary identifier C-RNTI of the user equipment.

With reference to the eleventh aspect, in a first possible implementation manner, before the user equipment sends the uplink data and the cell radio network temporary identifier C-RNTI to the base station, the method further includes:
determining that uplink data other than the uplink data further needs to be sent; and
the sending, by the user equipment, the uplink data and a cell radio network temporary identifier C-RNTI of the user equipment to the base station by using the common uplink scheduling information includes:
   sending, by the user equipment, the uplink data, a buffer status report BSR, and the uplink control information to the base station by using the common uplink scheduling information, where the BSR is used to represent buffer information which indicates that there is also the uplink data that needs to be sent other than the uplink data that is already sent.

With reference to the eleventh aspect or with reference to the first possible implementation manner of the eleventh aspect, in a second possible implementation manner, the method further includes:
receiving, by the user equipment, acknowledgement/negative acknowledgement information sent by the base station; and
determining, according to the acknowledgement/negative acknowledgement information, whether the uplink data needs to be sent to the base station again.

With reference to the second possible implementation manner of the eleventh aspect, in a third possible implementation manner, the receiving, by the user equipment, acknowledgement/negative acknowledgement information sent by the base station includes:
receiving, by the user equipment on a scrambled PDCCH, downlink scheduling information sent by the base station, and when descrambling the scrambled PDCCH by using a G-RNTI, successfully receiving the scrambled PDCCH, and determining that a C-RNTI carried on a PDSCH indicated in the downlink scheduling information is the same as the C-RNTI of the user equipment, obtaining, on the PDSCH indicated in the downlink scheduling information, the acknowledgement/negative acknowledgement information sent by the base station; or
receiving, by the user equipment by using a scrambled PDCCH, downlink scheduling information sent by the base station, and when descrambling the scrambled PDCCH by using the C-RNTI and successfully receiving the scrambled PDCCH, obtaining, on a PDSCH indicated in the downlink scheduling information, the acknowledgement/negative acknowledgement information sent by the base station; or
receiving, by the user equipment, a physical HARQ indicator channel PHICH sent by the base station, and when determining that a C-RNTI corresponding to the PHICH is the same as the C-RNTI of the user equipment, obtaining, from the PHICH, the acknowledgement/negative acknowledgement information sent by the base station.

According to a twelfth aspect, a data transmission method is provided and includes:
configuring, by a base station, common uplink scheduling information for user equipment, where the common uplink scheduling information includes a common physical uplink shared channel PUSCH, and the common PUSCH is used to represent a PUSCH that can be shared by multiple user equipments; and
receiving, by the base station, uplink data and uplink control information that are sent by the user equipment by using the common uplink scheduling information, where the uplink control information includes a cell radio network temporary identifier C-RNTI of the user equipment.

In the aspects of the present disclosure, user equipment obtains common uplink scheduling information configured by a base station, where the common uplink scheduling information includes a common physical uplink shared channel PUSCH, and the common PUSCH is used to represent a PUSCH that can be shared by multiple user equipments; and when needing to send uplink data to the base station, the user equipment sends the uplink data and uplink control information to the base station by using the common uplink scheduling information. In this way, when needing to send uplink data to a base station, user equipment sends the uplink data to the base station by using obtained common uplink scheduling information. It further simplifies a transmission procedure for sending control information between the user equipment and the base station, so that a data transmission delay is reduced, and system performance is improved.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a schematic structural diagram of a data transmission device according to an embodiment of the present invention;
FIG. 2 is a schematic structural diagram of a data transmission device according to an embodiment of the present invention;
FIG. 3 is a schematic structural diagram of a data transmission device according to an embodiment of the present invention;
FIG. 4 is a schematic structural diagram of a data transmission device according to an embodiment of the present invention;
FIG. 5 is a schematic structural diagram of a data transmission device according to an embodiment of the present invention;
FIG. 6 is a schematic structural diagram of a data transmission device according to an embodiment of the present invention;
FIG. 7 is a schematic structural diagram of a data transmission device according to an embodiment of the present invention;
FIG. 8 is a schematic structural diagram of a data transmission device according to an embodiment of the present invention;
FIG. 9 is a schematic flowchart of a data transmission method according to an embodiment of the present invention;
FIG. 10 is a schematic flowchart of a data transmission method according to an embodiment of the present invention;
FIG. 11 is a schematic flowchart of a data transmission method according to an embodiment of the present invention; and
FIG. 12 is a schematic flowchart of a data transmission method according to an embodiment of the present invention.

### DESCRIPTION OF EMBODIMENTS

To achieve objectives of the present invention, the embodiments of the present invention provide a data transmission method and device. In the prior art, when user equipment needs to send uplink data to a base station, if the base station has not triggered uplink scheduling for the to-be-sent data of the user equipment, the user equipment cannot send the uplink data to the base station. Therefore, firstly, the user equipment sends a scheduling request (English: Scheduling Request, SR for short) to the base station; secondly, the user equipment receives a scheduling resource that is used to send control information and fed back by the base station; thirdly, the user equipment sends the control information to the base station by using the scheduling resource; fourthly, the user equipment receives uplink scheduling information that is used to send the uplink data and fed back by the base station based on the control information; finally, the user equipment sends the uplink data to the base station by using the uplink scheduling information obtained above. In this way, when a small burst data packet service is being transmitted between the user equipment and the base station, a time for requesting to obtain a scheduling resource is longer than an uplink data transmission time.

To resolve the foregoing problem, when user equipment needs to send uplink data to a base station device, but the base station has not triggered uplink scheduling for the to-be-sent data of the user equipment, a first solution is proposed: Control information is sent by using an uplink transmission resource, then uplink scheduling information is obtained from the base station, and the uplink data is sent to the base station by using the obtained uplink scheduling information. A second solution is also proposed: The uplink data is sent to the base station by using common uplink scheduling information configured by the base station. The two solutions simplify a procedure for uplink data transmission between the user equipment and the base station, so that a data transmission delay is reduced, and system performance is improved.

It should be noted that, a C-RNTI (CellRadio Network Temporary Identifier) involved in the embodiments of the present invention is a cell radio network temporary identifier that is allocated by a base station to user equipment and that is specific to the user equipment. Each user equipment has a unique C-RNTI, that is, the base station can identify user equipment according to a C-RNTI. The cell radio network temporary identifier C-RNTI of the user equipment refers to any identifier that can uniquely indicate the user equipment, and may be a conventional C-RNTI, or may be another identifier that uniquely indicates the user equipment. This is not specifically limited herein.

The data transmission solution described in this specification may be applied to a Long Term Evolution (English: Long Term Evolution, LTE for short) system and another communications system of this type.

This specification provides descriptions with reference to user equipment and/or a base station.

The user equipment may also be referred to as a terminal device, and may be a wireless terminal or a wired terminal. The wireless terminal may refer to a device that provides a user with voice and/or data connectivity, a handheld device with a wireless connection function, or another processing device connected to a wireless modem.

The wireless terminal may communicate with one or more core networks by using a radio access network (RAN for short). The wireless terminal may be a mobile terminal such as a mobile phone (or referred to as a "cellular" phone) or a computer with a mobile terminal, for example, may be a portable, pocket-sized, handheld, computer built-in, or in-vehicle mobile apparatus, which exchanges voice and/or data with the radio access network. For example, the wireless terminal may be a device such as a personal communications service (PCS for short) phone, a cordless telephone set, a Session Initiation Protocol (SIP for short) phone, a wireless local loop (WLL for short) station, or a personal digital assistant (PDA for short). The wireless terminal may also be referred to as a system, a subscriber unit (SU for short), a subscriber station (SS for short), a mobile station (MB for short), a mobile station (Mobile), a remote station (RS for short), an access point (AP for short), a remote terminal (RT for short), an access terminal (AT for short), a user terminal (UT for short), a user agent (UA for short), a terminal device, or user equipment (UE for short).

The base station (for example, an access point) may refer to a device that is in an access network and communicates, over an air interface, with a wireless terminal by using one or more sectors. The base station device may further coordinate attribute management of the air interface. For example, the base station device may be an evolved NodeB (eNB or e-NodeB for short) in the LTE. This is not limited in this application.

It should be noted that, the base station described in the embodiments of the present invention may be a base station device, or may be a relay device, or another network element device that has a base station function.

The term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

The following describes the embodiments of the present invention in detail with reference to the accompanying drawings. Apparently, the described embodiments are merely some but not all of the embodiments of the present invention. All other embodiments obtained by persons of ordinary skill in the art based on the embodiments of the present invention without creative efforts shall fall within the protection scope of the present invention.

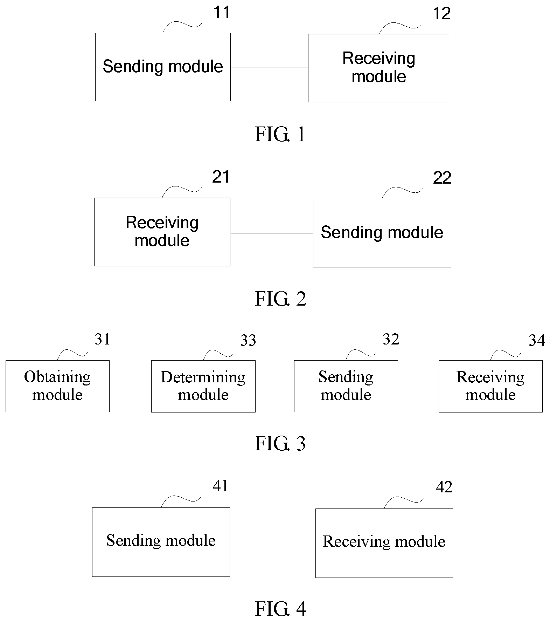

As shown in FIG. 1, FIG. 1 is a schematic structural diagram of a data transmission device according to an embodiment of the present invention. The data transmission device includes a sending module 11 and a receiving module 12.

The sending module 11 is configured to: when uplink data needs to be sent to a base station, send control information to the base station by using an uplink transmission resource. The control information is used to request the base station to perform uplink scheduling for the to-be-sent data of the user equipment.

The receiving module 12 is configured to receive uplink scheduling information that is returned by the base station for the control information sent by the sending module 11.

The sending module 11 is further configured to send the uplink data to the base station by using the uplink scheduling information received by the receiving module 12.

Specifically, the control information includes a buffer status report BSR, and the uplink transmission resource includes a physical uplink control channel PUCCH.

The sending module 11 is specifically configured to send the BSR to the base station by using the PUCCH.

Specifically, the sending module 11 is specifically configured to: when a physical resource block occupied by the PUCCH used to send the BSR is the same as a physical resource block occupied by a PUCCH used to send channel state information CSI, if it is found that a transmission conflict occurs between sending of the BSR and sending of the CSI, preferentially send, according to specified sending priorities of sending the BSR and sending the CSI, the BSR/CSI with a higher sending priority to the base station by using the PUCCH; or
when a physical resource block occupied by the PUCCH used to send the BSR is the same as a physical resource block occupied by a PUCCH used to send an acknowledgement/a negative acknowledgement ACK/NACK, if it is found that a transmission conflict occurs between sending of the BSR and sending of the ACK/NACK, preferentially send, according to specified sending priorities of sending the BSR and sending the ACK/NACK, the BSR/ACK/NACK with a higher sending priority to the base station by using the PUCCH.

Optionally, the PUCCH includes at least one or more of a second-format physical uplink control channel Format2_PUCCH or a third-format physical uplink control channel Format3_PUCCH.

Optionally, the sending module 11 is further configured to: when sending the BSR to the base station by using the Format3_PUCCH, send, by using the Format3_PUCCH, a packet handling report PHR to the base station if an idle bit exists in a physical resource block corresponding to the Format3_PUCCH.

Specifically, the control information includes a buffer status report BSR, and the uplink transmission resource includes common uplink scheduling information.

The receiving module 12 is further configured to receive the common uplink scheduling information configured by the base station. The common uplink scheduling information includes a common physical uplink shared channel PUSCH, and the common PUSCH is used to represent a PUSCH that can be shared by multiple user equipments.

The sending module 11 is specifically configured to send the BSR and a cell radio network temporary identifier C-RNTI of the user equipment to the base station by using the common uplink scheduling information received by the receiving module.

Specifically, the receiving module 12 is further configured to receive a group radio network temporary identifier G-RNTI configured by the base station. The G-RNTI represents an RNTI that is configured by the base station and that is corresponding to the common uplink scheduling information shared by multiple user equipments.

The receiving module 12 is specifically configured to: receive, on a scrambled physical downlink control channel PDCCH, the uplink scheduling information that is sent by the base station and is for the control information;
descramble the scrambled PDCCH by using the G-RNTI;
when the scrambled PDCCH is successfully received, obtain downlink scheduling information from the scrambled PDCCH, where the downlink scheduling information indicates a physical downlink shared channel PDSCH that carries uplink scheduling information and a C-RNTI of target user equipment that uses the uplink scheduling information; and
when it is determined that the C-RNTI that is carried on the PDSCH and is of the target user equipment that uses the uplink scheduling information is the same as the C-RNTI of the user equipment, determine that the uplink scheduling information carried on the PDSCH is the uplink scheduling information of the user equipment.

Specifically, the receiving module 12 is specifically configured to: obtain, on the scrambled PDCCH, the common uplink scheduling information sent by the base station, where the scrambled PDCCH is obtained after the base station scrambles, by using the G-RNTI, the PDCCH; or
receive radio resource control RRC signaling sent by the base station, where the RRC signaling carries the common uplink scheduling information; or
receive a system message sent by the base station, where the system message carries the common uplink scheduling information.

Specifically, the receiving module 12 is specifically configured to: receive, on a scrambled physical downlink control channel PDCCH, the uplink scheduling information that is sent by the base station and is for the control information;
descramble the scrambled PDCCH by using the cell radio network temporary identifier C-RNTI of the user equipment; and
when the scrambled PDCCH is successfully received, obtain the uplink scheduling information carried on the scrambled PDCCH.

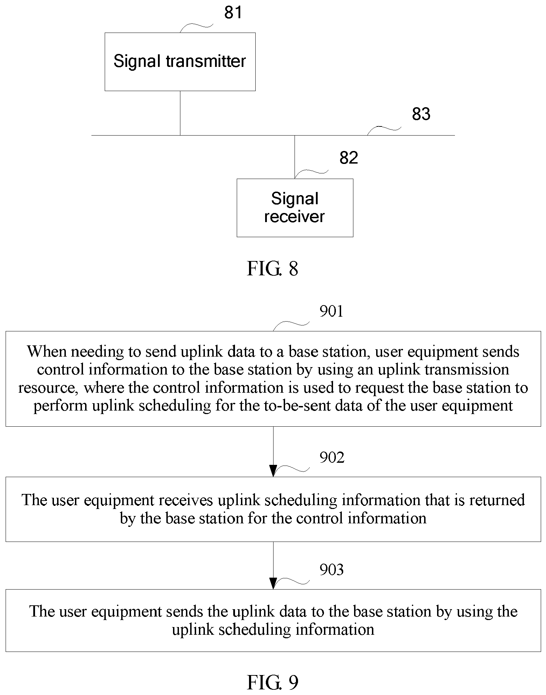

It should be noted that, the data transmission device described in this embodiment of the present invention has functions shown in FIG. 9 to FIG. 12 in embodiments of the present invention, and may be user equipment or a mobile terminal. This is not specifically limited herein.

The data transmission device described in this embodiment of the present invention may be implemented in a hardware manner or in a software manner, and an implementation manner is not limited herein.

When needing to send uplink data to a base station, the data transmission device sends control information to the base station by using an uplink transmission resource, where the control information is used to request the base station to perform uplink scheduling for the to-be-sent data of the user equipment; receives uplink scheduling information that is returned by the base station for the control information; and sends the uplink data to the base station by using the uplink scheduling information. In this way, when user equipment needs to send uplink data to a base station, but the base station has not triggered uplink scheduling for the to-be-sent data of the user equipment, the user equipment directly sends control information by using an uplink transmission resource, quickly obtains uplink scheduling information from the base station, and sends the uplink data to the base station by using the uplink scheduling information. This can simplify a procedure for sending control information between the user equipment and the base station, so that a data transmission delay is reduced, and system performance is improved.

As shown in FIG. 2, FIG. 2 is a schematic structural diagram of a data transmission device according to an embodiment of the present invention. The data transmission device includes a receiving module 21 and a sending module 22.

The receiving module 21 is configured to receive control information that is sent by user equipment by using an uplink transmission resource. The control information is used to request the base station to perform uplink scheduling for to-be-sent data of the user equipment.

The sending module 22 is configured to send uplink scheduling information for the control information to the user equipment according to the control information received by the receiving module21.

The receiving module 21 is further configured to receive the uplink data that is sent by the user equipment by using the uplink scheduling information.

Specifically, the receiving module 21 is specifically configured to receive, on a physical uplink control channel PUCCH, the control information sent by the user equipment. The control information includes a buffer status report BSR.

Optionally, the sending module 22 is further configured to configure common uplink scheduling information for the user equipment.

The receiving module 21 is specifically configured to receive the control information and a cell radio network temporary identifier C-RNTI of the user equipment that are sent by the user equipment by using the common uplink scheduling information. The control information includes a buffer status report BSR.

Optionally, the sending module 22 is further configured to configure a group radio network temporary identifier G-RNTI for the user equipment. The G-RNTI represents an RNTI that is configured by the base station and that is corresponding to the common uplink scheduling information shared by multiple user equipments.

The sending module 22 is specifically configured to: scramble a physical downlink control channel PDCCH by using the G-RNTI, and configure the common uplink scheduling information for the user equipment by using the scrambled PDCCH; or
send radio resource control RRC signaling to the user equipment, where the RRC signaling carries the common uplink scheduling information; or
send a system message to the user equipment, where the system message carries the common uplink scheduling information.

Specifically, the sending module 22 is specifically configured to: allocate the uplink scheduling information to the user equipment according to the control information;
carry the uplink scheduling information and the C-RNTI of the user equipment on a physical downlink shared channel PDSCH indicated in downlink scheduling information; and
scramble, by using the G-RNTI, the physical downlink control channel PDCCH that carries the downlink scheduling information, and send the scrambled PDCCH to the user equipment, where the downlink scheduling information includes the PDSCH.

Specifically, the sending module 22 is specifically configured to: allocate the uplink scheduling information to the user equipment according to the control information; and
scramble, by using the C-RNTI of the user equipment, the physical downlink control channel PDCCH that carries the uplink scheduling information, and send the scrambled PDCCH to the user equipment.

It should be noted that, the data transmission device described in this embodiment of the present invention has functions shown in FIG. 9 to FIG. 12 in embodiments of the present invention, and may be a base station. This is not specifically limited herein.

The data transmission device described in this embodiment of the present invention may be implemented in a hardware manner or in a software manner, and an implementation manner is not limited herein.

As shown in FIG. 3, FIG. 3 is a schematic structural diagram of a data transmission device according to an embodiment of the present invention. The data transmission device includes an obtaining module 31 and a sending module 32.

The obtaining module 31 is configured to obtain common uplink scheduling information configured by a base station. The common uplink scheduling information includes a common physical uplink shared channel PUSCH, and the common PUSCH is used to represent a PUSCH that can be shared by multiple user equipments.

The sending module 32 is configured to: when uplink data needs to be sent to the base station, send the uplink data and uplink control information to the base station by using the common uplink scheduling information obtained by the obtaining module31. The uplink control information includes a cell radio network temporary identifier C-RNTI of the user equipment.

Optionally, the data transmission device further includes a determining module 33.

The determining module 33 is configured to: before the uplink data and the cell radio network temporary identifier C-RNTI of the user equipment are sent to the base station, determine that uplink data other than the uplink data further needs to be sent.

The sending module 32 is specifically configured to send the uplink data, a buffer status report BSR, and the uplink control information to the base station by using the common uplink scheduling information. The BSR is used to represent buffer information which indicates that there is also the uplink data that needs to be sent other than the uplink data that is already sent.

Optionally, the data transmission device further includes a receiving module 34.

The receiving module 34 is configured to: receive acknowledgement/negative acknowledgement information sent by the base station, and determine, according to the acknowledgement/negative acknowledgement information, whether the uplink data needs to be sent to the base station again.

Specifically, the receiving module 34 is specifically configured to: receive, on a scrambled PDCCH, downlink scheduling information sent by the base station, and when the scrambled PDCCH is descrambled by using a G-RNTI and is successfully received, and when it is determined that a C-RNTI carried on a PDSCH indicated in the downlink scheduling information is the same as the C-RNTI of the user equipment, obtain, on the PDSCH indicated in the downlink scheduling information, the acknowledgement/negative acknowledgement information sent by the base station; or
receive, by using a scrambled PDCCH, downlink scheduling information sent by the base station, and when the scrambled PDCCH is descrambled by using the C-RNTI and is successfully received, obtain, on a PDSCH indicated in the downlink scheduling information, the acknowledgement/negative acknowledgement information sent by the base station; or
receive a physical HARQ indicator channel PHICH sent by the base station, and when it is determined that a C-RNTI corresponding to the PHICH is the same as the C-RNTI of the user equipment, obtain, from the PHICH, the acknowledgement/negative acknowledgement information sent by the base station.

It should be noted that, the data transmission device described in this embodiment of the present invention has functions shown in FIG. 9 to FIG. 12 in embodiments of the present invention, and may be user equipment or a mobile terminal. This is not specifically limited herein.

The data transmission device described in this embodiment of the present invention may be implemented in a hardware manner or in a software manner, and an implementation manner is not limited herein.

The data transmission device obtains common uplink scheduling information configured by a base station. When needing to send uplink data to the base station, the data transmission device sends the uplink data and uplink control information to the base station by using the common uplink scheduling information. In this way, user equipment sends uplink data to a base station by using common uplink scheduling information. Compared with the foregoing implementation manner, this further omits a transmission procedure for sending control information between the user equipment and the base station, so that a data transmission delay is reduced, and system performance is improved.

As shown in FIG. 4, FIG. 4 is a schematic structural diagram of a data transmission device according to an embodiment of the present invention. The data transmission device includes a sending module 41 and a receiving module 42.

The sending module 41 is configured to configure common uplink scheduling information for user equipment. The common uplink scheduling information includes a common physical uplink shared channel PUSCH, and the common PUSCH is used to represent a PUSCH that can be shared by multiple user equipments.

The receiving module 42 is configured to receive uplink data and uplink control information that are sent by the user equipment by using the common uplink scheduling information. The uplink control information includes a cell radio network temporary identifier C-RNTI of the user equipment.

It should be noted that, the data transmission device described in this embodiment of the present invention has functions shown in FIG. 9 to FIG. 12 in embodiments of the present invention, and may be a base station. This is not specifically limited herein.

The data transmission device described in this embodiment of the present invention may be implemented in a hardware manner or in a software manner, and an implementation manner is not limited herein.

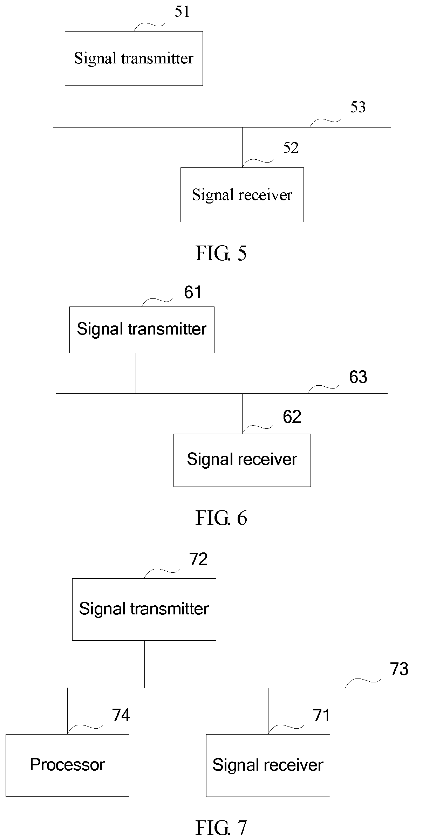

As shown in FIG. 5, FIG. 5 is a schematic structural diagram of a data transmission device according to an embodiment of the present invention. The data transmission device has functions depicted in FIG. 9 to FIG. 12 in embodiments of the present invention. The data transmission device may be implemented by using a general-purpose computer device. The data transmission device includes a signal transmitter 51 and a signal receiver 52, and the signal transmitter 51 and the signal receiver 52 are connected by using a communications bus 53.

The signal transmitter 51 is configured to: when uplink data needs to be sent to a base station, send control information to the base station by using an uplink transmission resource. The control information is used to request the base station to perform uplink scheduling for the to-be-sent data of the user equipment.

The signal receiver 52 is configured to receive uplink scheduling information that is returned by the base station for the control information.

The signal transmitter 51 is further configured to send the uplink data to the base station by using the uplink scheduling information.

Specifically, the control information includes a buffer status report BSR, and the uplink transmission resource includes a physical uplink control channel PUCCH.

The signal transmitter 51 is specifically configured to send the BSR to the base station by using the PUCCH.

The signal transmitter 51 is specifically configured to: when a physical resource block occupied by the PUCCH used to send the BSR is the same as a physical resource block occupied by a PUCCH used to send channel state information CSI, if it is found that a transmission conflict occurs between sending of the BSR and sending of the CSI, preferentially send, according to specified sending priorities of sending the BSR and sending the CSI, the BSR/CSI with a higher sending priority to the base station by using the PUCCH; or
when a physical resource block occupied by the PUCCH used to send the BSR is the same as a physical resource block occupied by a PUCCH used to send an acknowledgement/a negative acknowledgement ACK/NACK, if it is found that a transmission conflict occurs between sending of the BSR and sending of the ACK/NACK, preferentially send, according to specified sending priorities of sending the BSR and sending the ACK/NACK, the BSR/ACK/NACK with a higher sending priority to the base station by using the PUCCH.

Optionally, the PUCCH includes at least one or more of a second-format physical uplink control channel Format2_PUCCH or a third-format physical uplink control channel Format3_PUCCH.

The signal transmitter 51 is further configured to: when sending the BSR to the base station by using the Format3_PUCCH, send, by using the Format3_PUCCH, a packet handling report PHR to the base station if an idle bit exists in a physical resource block corresponding to the Format3_PUCCH.

Specifically, the control information includes a buffer status report BSR, and the uplink transmission resource includes common uplink scheduling information.

The signal receiver 52 is further configured to receive the common uplink scheduling information configured by the base station. The common uplink scheduling information includes a common physical uplink shared channel PUSCH, and the common PUSCH is used to represent a PUSCH that can be shared by multiple user equipments.

The signal transmitter 51 is configured to send the BSR and a cell radio network temporary identifier C-RNTI of the user equipment to the base station by using the common uplink scheduling information.

The signal receiver 52 is further configured to receive a group radio network temporary identifier G-RNTI configured by the base station. The G-RNTI represents an RNTI that is configured by the base station and that is corresponding to the common uplink scheduling information shared by multiple user equipments.

That the signal receiver 52 is specifically configured to receive the uplink scheduling information that is returned by the base station for the control information specifically includes:
receiving, on a scrambled physical downlink control channel PDCCH, the uplink scheduling information that is sent by the base station and is for the control information;
descrambling the scrambled PDCCH by using the G-RNTI;
when the scrambled PDCCH is successfully received, obtaining downlink scheduling information from the scrambled PDCCH, where the downlink scheduling information indicates a physical downlink shared channel PDSCH that carries uplink scheduling information and a C-RNTI of target user equipment that uses the uplink scheduling information; and
when the user equipment determines that the C-RNTI that is carried on the PDSCH and is of the target user equipment that uses the uplink scheduling information is the same as the C-RNTI of the user equipment, determining that the uplink scheduling information carried on the PDSCH is the uplink scheduling information of the user equipment.

Specifically, that the signal receiver 52 is specifically configured to obtain the common uplink scheduling information sent by the base station specifically includes: obtaining, on the scrambled PDCCH, the common uplink scheduling information sent by the base station, where the scrambled PDCCH is obtained after the base station scrambles, by using the G-RNTI, the PDCCH; or
receiving radio resource control RRC signaling sent by the base station, where the RRC signaling carries the common uplink scheduling information; or
receiving a system message sent by the base station, where the system message carries the common uplink scheduling information.

Specifically, that the signal receiver 52 is specifically configured to receive the uplink scheduling information that is returned by the base station for the control information specifically includes:
receiving, on a scrambled physical downlink control channel PDCCH, the uplink scheduling information that is sent by the base station and is for the control information;
descrambling the scrambled PDCCH by using the cell radio network temporary identifier C-RNTI of the user equipment; and
when the scrambled PDCCH is successfully received, obtaining the uplink scheduling information carried on the scrambled PDCCH.

It should be noted that, the data transmission device described in this embodiment of the present invention may be user equipment or a mobile terminal. This is not specifically limited herein.

When needing to send uplink data to a base station, the data transmission device sends control information to the base station by using an uplink transmission resource, where the control information is used to request the base station to perform uplink scheduling for the to-be-sent data of the user equipment; receives uplink scheduling information that is returned by the base station for the control information; and sends the uplink data to the base station by using the uplink scheduling information. In this way, when user equipment needs to send uplink data to a base station, but the base station has not triggered uplink scheduling for the to-be-sent data of the user equipment, the user equipment directly sends control information by using an uplink transmission resource, quickly obtains uplink scheduling information from the base station, and sends the uplink data to the base station by using the uplink scheduling information. This can simplify a procedure for sending control information between the user equipment and the base station, so that a data transmission delay is reduced, and system performance is improved.

As shown in FIG. 6, FIG. 6 is a schematic structural diagram of a data transmission device according to an embodiment of the present invention. The data transmission device has functions depicted in FIG. 9 to FIG. 12 in embodiments of the present invention. The data transmission device may be implemented by using a general-purpose computer device. The data transmission device includes a signal transmitter 61 and a signal receiver 62, and the signal transmitter 61 and the signal receiver 62 are connected by using a communications bus 63.

The signal receiver 62 is configured to receive control information that is sent by user equipment by using an uplink transmission resource. The control information is used to request the base station to perform uplink scheduling for to-be-sent data of the user equipment.

The signal transmitter 61 is configured to send uplink scheduling information for the control information to the user equipment according to the control information.

The signal receiver 62 is further configured to receive the uplink data that is sent by the user equipment by using the uplink scheduling information.

Specifically, the signal receiver 62 is specifically configured to receive, on a physical uplink control channel PUCCH, the control information sent by the user equipment. The control information includes a buffer status report BSR.

In a possible implementation manner, the signal transmitter 61 is further configured to configure common uplink scheduling information for the user equipment.

The signal receiver 62 is specifically configured to receive the control information and a cell radio network temporary identifier C-RNTI of the user equipment that are sent by the user equipment by using the common uplink scheduling information. The control information includes a buffer status report BSR.

In a possible implementation manner, the signal transmitter 61 is further configured to configure a group radio network temporary identifier G-RNTI for the user equipment. The G-RNTI represents an RNTI that is configured by the base station and that is corresponding to the common uplink scheduling information shared by multiple user equipments.

That the signal transmitter 61 is configured to configure the common uplink scheduling information for the user equipment specifically includes:
scrambling a physical downlink control channel PDCCH by using the G-RNTI, and configuring the common uplink scheduling information for the user equipment by using the scrambled PDCCH; or
sending radio resource control RRC signaling to the user equipment, where the RRC signaling carries the common uplink scheduling information; or
sending a system message to the user equipment, where the system message carries the common uplink scheduling information.

In a possible implementation manner, the signal transmitter 61 is specifically configured to: allocate the uplink scheduling information to the user equipment according to the control information;
carry the uplink scheduling information and the C-RNTI of the user equipment to a physical downlink shared channel PDSCH indicated in downlink scheduling information; and
scramble, by using the G-RNTI, the physical downlink control channel PDCCH that carries the downlink scheduling information, and send the scrambled PDCCH to the user equipment, where the downlink scheduling information includes the PDSCH.

In a possible implementation manner, the signal transmitter 61 is specifically configured to: allocate the uplink scheduling information to the user equipment according to the control information; and
scramble, by using the C-RNTI of the user equipment, the physical downlink control channel PDCCH that carries the uplink scheduling information, and send the scrambled PDCCH to the user equipment.

It should be noted that, the data transmission device described in this embodiment of the present invention may be a base station. This is not specifically limited herein.

As shown in FIG. 7, FIG. 7 is a schematic structural diagram of a data transmission device according to an embodiment of the present invention. The data transmission device has functions depicted in FIG. 9 to FIG. 12 in embodiments of the present invention. The data transmission device may be implemented by using a general-purpose computer device. The data transmission device includes a signal receiver 71 and a signal transmitter 72, and the signal receiver 71 and the signal transmitter 72 are connected by using a communications bus 73.

The signal receiver 71 is configured to obtain common uplink scheduling information configured by a base station. The common uplink scheduling information includes a common physical uplink shared channel PUSCH, and the common PUSCH is used to represent a PUSCH that can be shared by multiple user equipments.

The signal transmitter 72 is configured to: when uplink data needs to be sent to the base station, send the uplink data and uplink control information to the base station by using the common uplink scheduling information. The uplink control information includes a cell radio network temporary identifier C-RNTI of the user equipment.

Optionally, the data transmission device further includes a processor 74.

The processor 74 is configured to: before the uplink data and the cell radio network temporary identifier C-RNTI of the user equipment are sent to the base station, determine that uplink data other than the uplink data further needs to be sent.

The signal transmitter 72 is specifically configured to send the uplink data, a buffer status report BSR, and the uplink control information to the base station by using the common uplink scheduling information. The BSR is used to represent buffer information which indicates that there is also the uplink data that needs to be sent other than the uplink data that is already sent.

Specifically, the signal receiver 71 is further configured to: receive acknowledgement/negative acknowledgement information sent by the base station; and
determine, according to the acknowledgement/negative acknowledgement information, whether the uplink data needs to be sent to the base station again.

Specifically, the signal receiver 71 is specifically configured to: receive, on a scrambled PDCCH, downlink scheduling information sent by the base station, and when the scrambled PDCCH is descrambled by using a G-RNTI and is successfully received, and when it is determined that a C-RNTI carried on a PDSCH indicated in the downlink scheduling information is the same as the C-RNTI of the user equipment, obtain, on the PDSCH indicated in the downlink scheduling information, the acknowledgement/negative acknowledgement information sent by the base station; or
receive, by using a scrambled PDCCH, downlink scheduling information sent by the base station, and when the scrambled PDCCH is descrambled by using the C-RNTI and is successfully received, obtain, on a PDSCH indicated in the downlink scheduling information, the acknowledgement/negative acknowledgement information sent by the base station; or
receive a physical HARQ indicator channel PHICH sent by the base station, and when it is determined that a C-RNTI corresponding to the PHICH is the same as the C-RNTI of the user equipment, obtain, from the PHICH, the acknowledgement/negative acknowledgement information sent by the base station.

It should be noted that, the data transmission device described in this embodiment of the present invention may be user equipment or a mobile terminal. This is not specifically limited herein.

The data transmission device obtains common uplink scheduling information configured by a base station. When needing to send uplink data to the base station, the data transmission device sends the uplink data and uplink control information to the base station by using the common uplink scheduling information. In this way, user equipment sends uplink data to a base station by using common uplink scheduling information. Compared with the foregoing implementation manner, this further omits a transmission procedure for sending control information between the user equipment and the base station, so that a data transmission delay is reduced, and system performance is improved.

As shown in FIG. 8, FIG. 8 is a schematic structural diagram of a data transmission device according to an embodiment of the present invention. The data transmission device has functions depicted in FIG. 9 to FIG. 12 in embodiments of the present invention. The data transmission device may be implemented by using a general-purpose computer device. The data transmission device includes a signal transmitter 81 and a signal receiver 82, and the signal transmitter 81 and the signal receiver 82 are connected by using a communications bus 83.

The signal transmitter 81 is configured to configure common uplink scheduling information for user equipment. The common uplink scheduling information includes a common physical uplink shared channel PUSCH, and the common PUSCH is used to represent a PUSCH that can be shared by multiple user equipments.

The signal receiver 82 is configured to receive uplink data and uplink control information that are sent by the user equipment by using the common uplink scheduling information. The uplink control information includes a cell radio network temporary identifier C-RNTI of the user equipment.

It should be noted that, the data transmission device described in this embodiment of the present invention may be a base station. This is not specifically limited herein.

As shown in FIG. 9, FIG. 9 is a schematic flowchart of a data transmission method according to an embodiment of the present invention. The method may be as follows.

Step 901: When needing to send uplink data to a base station, user equipment sends control information to the base station by using an uplink transmission resource, where the control information is used to request the base station to perform uplink scheduling for the to-be-sent data of the user equipment.

The control information includes a buffer status report (English: Buffer Status Report, BSR for short).

It should be noted that, in addition to the BSR, the control information may include other information such as power headroom report (English: Power Headroom Report, PHR for short) information.

The BSR included in the control information refers to buffer-related information, such as a buffer size, of the uplink data, and not only may refer to a conventional BSR, but also may refer to other information, such as an enhanced BSR, that has a BSR function.

In step 901, the uplink transmission resource refers to a physical resource, such as a physical uplink control channel (English: Physical Uplink Control Channel, PUCCH for short) or common uplink scheduling information, that is already configured for the user equipment and that can be used to carry uplink control information.

The common uplink scheduling information is configured by the base station for the user equipment, the common uplink scheduling information includes a common physical uplink shared channel PUSCH and other scheduling information, and the common PUSCH is used to represent a PUSCH that can be shared by multiple user equipments.

This means that the user equipment can send the control information to the base station by using the common uplink scheduling information.

The common uplink scheduling information may further include one or more of a pilot root sequence or shift information. This is not specifically limited herein.

It should be noted that, for the common uplink scheduling information, the base station configures a group radio network temporary identifier (G-RNTI for short) for the user equipment. The G-RNTI represents an RNTI corresponding to the foregoing common uplink scheduling information that can be shared by multiple user equipments.

The G-RNTI may be generated synchronously by the base station for the common uplink scheduling information when the base station configures the common uplink scheduling information for the user equipment, or may be pre-configured. This is not specifically limited herein.

Specifically, manners of sending the control information to the base station by using the uplink transmission resource include but are not limited to the following manners.

### Manner 1:

The user equipment sends the control information to the base station on the PUCCH.

Specifically, the user equipment sends the BSR to the base station on the PUCCH.

A BSR defined in an existing protocol is used as an example. In the existing protocol, two types of BSRs are defined: One type of BSR occupies 8 bits and is buffer status information of a single logical channel group (English: Logical Channel Group, LCG for short); the other type of BSR occupies 24 bits and is corresponding to buffer status information of four LCGs.

When the BSR is being sent to the base station, one of a second-format physical uplink control channel (that is, a Format2_PUCCH) or a third-format physical uplink control channel (that is, a Format3_PUCCH) is preferentially selected.

Specifically, when the user equipment sends one BSR to the base station, the BSR may be sent to the base station on the Format2_PUCCH or the Format3_PUCCH.

For example, when only one LCG carries a data transmission service, it means that only a BSR of the LCG needs to be sent to the base station. In this case, the Format2_PUCCH or the Format3_PUCCH may be selected. A quantity of bits for sending a BSR by using the Format2_PUCCH or the Format3_PUCCH may be 8 or 6, or a quantity of bits may be another value. This is not limited herein.

When the user equipment sends multiple BSRs to the base station, the multiple BSRs may be sent to the base station on the Format3_PUCCH.

For example, it is assumed that a quantity of bits occupied by a BSR corresponding to each LCG is 6 and that there are four logical channel groups, a quantity of bits occupied by BSRs corresponding to the four logical channel groups is 24. When multiple LCGs carry a data transmission service, it means that multiple BSRs corresponding to the multiple LCGs need to be sent to the base station. To enable a PUCCH to carry as many BSRs as possible, an original 64-order BSR may be changed to a 32-order BSR in this case, so that the quantity of bits occupied by the BSR corresponding to each LCG is decreased to 5, and the quantity of bits occupied by the BSRs corresponding to the fourth logical channel groups is decreased to 20. In this case, the Format3_PUCCH is selected to send the four BSRs.

It should be noted that, when sending the BSR to the base station by using the Format3_PUCCH, the user equipment may send, by using the Format3_PUCCH, other information such as a PHR to the base station if an idle bit exists in a physical resource block corresponding to the Format3_PUCCH.

Optionally, the PUCCH used to send the control information may be a conventional PUCCH, that is, which occupied the same physical resource block (RB for short) as a PUCCH used to transmit channel state information (CSI for short) or a PUCCH used to transmit acknowledgement/negative acknowledgement (ACK/NACK for short) information; or may be an unconventional PUCCH, that is, the PUCCH is different from a physical resource block occupied by a conventional PUCCH. This is not specifically limited herein, either.

When the physical resource block occupied by the PUCCH used to send the BSR is the same as a physical resource block occupied by a conventional PUCCH used to transmit CSI, ACK/NACK, or the like, the user equipment distinguishes between the PUCCH used to send the BSR and the conventional PUCCH used to send the CSI, the ACK/NACK, or the like. For example, a distinguishing manner is as follows: Indication information is carried on a scrambling code of a PUCCH to indicate whether a current conventional PUCCH carriesa BSR or CSI/an ACK/a NACK; or a coding scheme used to send the BSR is different from a coding scheme used to send the CSI or the ACK/NACK. This is not specifically limited herein.

In this case, the base station distinguishes between the received BSR and the received CSI or the received ACK/NACK information sent by the user equipment.

In addition, when the physical resource block occupied by the PUCCH used to send the BSR is the same as the physical resource block occupied by the conventional PUCCH used to transmit the CSI, the ACK/NACK, or the like, if transmission of the CSI or the ACK/NACK conflicts with that of the BSR, the user equipment may preferentially send, according to specified sending priorities of sending the BSR and sending the CSI, the BSR/CSI with a higher sending priority to the base station by using the PUCCH, and preferentially send, according to specified sending priorities of sending the BSR and sending the ACK/NACK, the BSR/ACK/NACK with a higher sending priority to the base station by using the PUCCH.

For example, when the specified sending priority of sending the BSR is higher than the sending priority of sending the CSI, if it is found that a transmission conflict occurs between sending of the BSR and sending of the CSI, the user equipment preferentially sends the BSR to the base station by using the PUCCH.

When the specified sending priority of sending the BSR is lower than the sending priority of sending the CSI, if it is found that a transmission conflict occurs between sending of the BSR and sending of the CSI, the user equipment preferentially sends the CSI to the base station by using the PUCCH.

The sending priorities of sending the BSR and sending the CSI may be determined according to an actual requirement, or may be determined according to another requirement. This is not limited herein.

For example, when the specified sending priority of sending the BSR is higher than the sending priority of sending the ACK/NACK, if it is found that a transmission conflict occurs between sending of the BSR and sending of the ACK/NACK, the user equipment preferentially sends the BSR to the base station by using the PUCCH.

When the specified sending priority of sending the BSR is lower than the sending priority of sending the ACK/NACK, if it is found that a transmission conflict occurs between sending of the BSR and sending of the ACK/NACK, the user equipment preferentially sends the ACK/NACK to the base station device by using the PUCCH.

The sending priorities of sending the BSR and sending the ACK/NACK information may be determined according to an actual requirement, or may be determined according to another requirement. This is not limited herein.

### Manner 2:

The user equipment obtains the common uplink scheduling information configured by the base station.

The common uplink scheduling information includes the common physical uplink shared channel PUSCH, and the common PUSCH is used to represent a PUSCH that can be shared by multiple user equipments.

Specifically, a manner of obtaining, by the user equipment, the common uplink scheduling information configured by the base station includes but is not limited to the following:
The user equipment obtains, by using a scrambled PDCCH, the common uplink scheduling information sent by the base station, where the scrambled PDCCH is obtained after the base station scrambles, by using the G-RNTI, the PDCCH; or
the user equipment receives radio resource control RRC signaling sent by the base station, where the RRC signaling carries the common uplink scheduling information; or
the user equipment receives a system message sent by the base station, where the system message carries the common uplink scheduling information.

It should be noted that, for the common uplink scheduling information, the base station configures the group radio network temporary identifier (English: Radio Network Temporary Identifier, G-RNTI for short) for the user equipment.

The G-RNTI represents an RNTI that is configured by the base station and that is corresponding to the foregoing common uplink scheduling information that can be shared by the multiple user equipments.

The G-RNTI may be generated synchronously by the base station for the common uplink scheduling information when the base station configures the common uplink scheduling information for the user equipment, or may be pre-configured. This is not specifically limited herein.

The user equipment sends the control information to the base station by using the common uplink scheduling information.

Specifically, the user equipment sends the BSR and a cell radio network temporary identifier C-RNTI of the user equipment to the base station by using the common uplink scheduling information.

It should be noted that, the common uplink scheduling information may further include other information such as a modulation and coding scheme (MCS for short), a pilot root sequence, or a shift parameter. This is not specifically limited herein.

In addition to sending the BSR and the C-RNTI of the user equipment to the base station by using the common uplink scheduling information, the user equipment may also send other information (such as an MCS) to the base station by using the common PUSCH. This is not specifically limited herein.

In this case, the base station receives the control information sent by the user equipment, and may further obtain the C-RNTI of the user equipment, and determine, by using the C-RNTI of the user equipment, the user equipment that sends the received control information.

Step 902: The user equipment receives uplink scheduling information that is returned by the base station for the control information.

The uplink scheduling information includes a physical uplink shared channel PUSCH.

In step 902, manners of receiving, by the user equipment, the uplink scheduling information returned by the base station are different because the manners of sending, by the user equipment, the control information to the base station in step 901 are different.

### Manner 1:

This manner is applicable to the foregoing manners of sending the control information that are described in step 901.

The user equipment receives, on the scrambled physical downlink control channel PDCCH, the uplink scheduling information that is sent by the base station and is for the control information.

Specifically, the user equipment descrambles the scrambled PDCCH by using the C-RNTI of the user equipment.

When successfully receiving the scrambled PDCCH, the user equipment obtains the uplink scheduling information carried on the scrambled PDCCH.

### Manner 2:

This manner is applicable to the foregoing manner 2, described in step 901, of sending the control information.

The user equipment receives, on the scrambled physical downlink control channel PDCCH, the uplink scheduling information that is sent by the base station and is for the control information.

Specifically, the user equipment descrambles the scrambled PDCCH by using the G-RNTI.

When successfully receiving the scrambled PDCCH, the user equipment obtains downlink scheduling information from the scrambled PDCCH. The downlink scheduling information indicates a physical downlink shared channel PDSCH that carries uplink scheduling information and a C-RNTI of target user equipment that uses the uplink scheduling information.

When determining that the C-RNTI that is carried on the PDSCH and is of the target user equipment that uses the uplink scheduling information is the same as the C-RNTI of the user equipment, the user equipment determines that the uplink scheduling information carried on the PDSCH is the uplink scheduling information of the user equipment.

Step 903: The user equipment sends the uplink data to the base station by using the uplink scheduling information.

According to the solution in this embodiment of the present invention, when needing to send uplink data to a base station, user equipment sends control information to the base station by using an uplink transmission resource, where the control information is used to request the base station to perform uplink scheduling for the to-be-sent data of the user equipment; receives uplink scheduling information that is returned by the base station for the control information; and sends the uplink data to the base station by using the uplink scheduling information. In this way, when user equipment needs to send uplink data to a base station, but the base station has not triggered uplink scheduling for the to-be-sent data of the user equipment, the user equipment directly sends control information by using an uplink transmission resource, quickly obtains uplink scheduling information from the base station, and sends the uplink data to the base station by using the uplink scheduling information. This can simplify a procedure for sending control information between the user equipment and the base station, so that a data transmission delay is reduced, and system performance is improved.

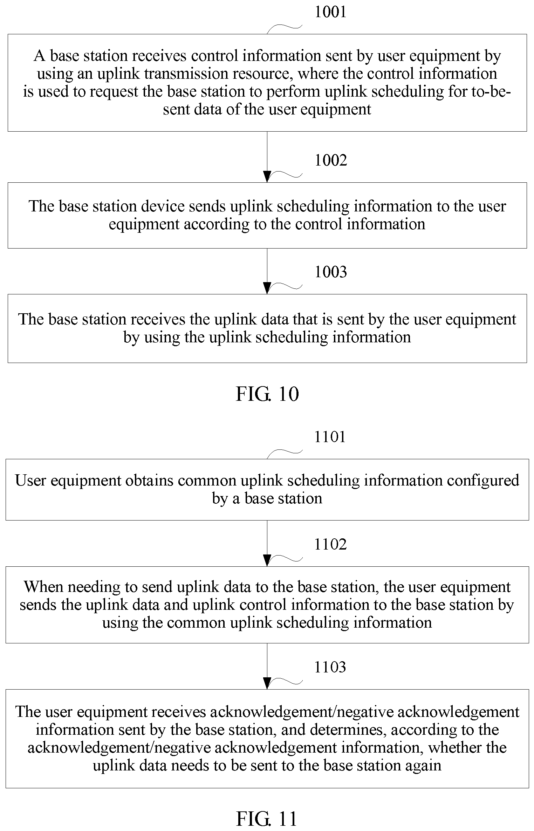

As shown in FIG. 10, FIG. 10 is a schematic flowchart of a data transmission method according to an embodiment of the present invention. The method may be as follows.

Step 1001: A base station receives control information that is sent by user equipment by using an uplink transmission resource, where the control information is used to request the base station to perform uplink scheduling for to-be-sent data of the user equipment.

It should be noted that, the uplink transmission resource refers to a physical resource, such as a physical uplink control channel (English: Physical Uplink Control Channel, PUCCH for short) or common uplink scheduling information, that is already configured for the user equipment and that can be used to carry uplink control information.

In step 1001, manners of receiving, by the base station, the control information sent by the user equipment by using the uplink transmission resource include but are not limited to the following:

### Manner 1:

The base station receives, on a PUCCH, the control information sent by the user equipment.

The control information includes a buffer status report (English: Buffer Status Report, BSR for short).

It should be noted that, in addition to the BSR, the control information may include other information such as power headroom report (English: Power Headroom Report, PHR for short) information.

The BSR included in the control information refers to buffer-related information, such as a buffer size, of the uplink data, and not only may refer to a conventional BSR, but also may refer to other information, such as an enhanced BSR, that has a BSR function.

### Manner 2:

The base station configures common uplink scheduling information for the user equipment.

The common uplink scheduling information includes a common PUSCH and other scheduling information, and the common PUSCH is used to represent a PUSCH that can be shared by multiple user equipments.

The common uplink scheduling information may further include one or more of a pilot root sequence or shift information. This is not specifically limited herein.

It should be noted that, for the common uplink scheduling information, the base station configures a group radio network temporary identifier (English: Radio Network Temporary Identifier, G-RNTI for short) for the user equipment. The G-RNTI represents an RNTI corresponding to the foregoing common uplink scheduling information that can be shared by multiple user equipments.

The G-RNTI may be generated synchronously by the base station for the common uplink scheduling information when the base station configures the common uplink scheduling information for the user equipment, or may be pre-configured. This is not specifically limited herein.

A manner of sending, by the base station, the common uplink scheduling information to the user equipment includes but is not limited to the following several manners:
The base station scrambles a physical downlink control channel PDCCH by using the G-RNTI, and sends the common uplink scheduling information to the user equipment by using the scrambled PDCCH; or
the base station sends radio resource control RRC signaling to the user equipment, where the RRC signaling carries the common uplink scheduling information; or
the base station sends a system message to the user equipment, where the system message carries the common uplink scheduling information.

The base station receives the control information and a C-RNTI of the user equipment that are sent by the user equipment by using the common uplink scheduling information.

The control information includes a buffer status report (English: Buffer Status Report, BSR for short).

It should be noted that, in addition to the BSR, the control information may include other information such as power headroom report (English: Power Headroom Report, PHR for short) information.

The BSR included in the control information refers to buffer-related information, such as a buffer size, of the uplink data, and not only may refer to a conventional BSR, but also may refer to other information, such as an enhanced BSR, that has a BSR function.

It should be noted that, in addition to the common PUSCH, the common uplink scheduling information may include other information such as one or more of a modulation and coding scheme, a pilot root sequence, a shift parameter, or the like.

In addition, the base station receives the control information sent by the user equipment, and may further obtain the C-RNTI of the user equipment, and determine, by using the C-RNTI of the user equipment, the user equipment that sends the received control information.

Step 1002: The base station device sends uplink scheduling information to the user equipment according to the control information.

In step 1002, the base station first allocates the uplink scheduling information to the user equipment according to the control information.

The uplink scheduling information includes a physical uplink shared channel PUSCH.

Then the base station sends the uplink scheduling information to the user equipment.

### Manner 1:

This manner is applicable to the foregoing manners of receiving the control information that are described in step 1001.

Specifically, the base station scrambles, by using the C-RNTI of the user equipment, the physical downlink control channel PDCCH that carries the uplink scheduling information, and sends the uplink scheduling information to the user equipment by using the scrambled PDCCH.

### Manner 2:

This manner is applicable to the foregoing manner 2, described in step 1001, of receiving the control information.

Specifically, at the base station, uplink scheduling information and the C-RNTI of the user equipment are carried on a physical downlink shared channel PDSCH indicated in downlink scheduling information. The base station scrambles, by using the G-RNTI, the physical downlink control channel PDCCH that carries the downlink scheduling information, and sends the scrambled PDCCH to the user equipment. The downlink scheduling information includes the physical downlink shared channel PDSCH.

Step 1003: The base station receives the uplink data that is sent by the user equipment by using the uplink scheduling information.

According to the solution in this embodiment of the present invention, when user equipment needs to send uplink data to a base station, but the base station has not triggered uplink scheduling for the to-be-sent data of the user equipment, the user equipment directly sends control information by using an uplink transmission resource, quickly obtains uplink scheduling information from the base station, and sends the uplink data to the base station by using the uplink scheduling information. This can simplify a procedure for sending control information between the user equipment and the base station, so that a data transmission delay is reduced, and system performance is improved.

As shown in FIG. 11, FIG. 11 is a schematic flowchart of a data transmission method according to an embodiment of the present invention. The method may be as follows.

Step 1101: User equipment obtains common uplink scheduling information configured by a base station.

The common uplink scheduling information includes a common physical uplink shared channel PUSCH, and the common PUSCH is used to represent a PUSCH that can be shared by multiple user equipments.

The user equipment can send uplink data to the base station by using the common uplink scheduling information.

The common uplink scheduling information may further include one or more of a pilot root sequence or shift information. This is not specifically limited herein.

It should be noted that, for the common uplink scheduling information, the base station configures a group radio network temporary identifier (English: Radio Network Temporary Identifier, G-RNTI for short) for the user equipment. The G-RNTI represents an RNTI corresponding to the foregoing common uplink scheduling information that can be shared by multiple user equipments.

The G-RNTI may be generated synchronously by the base station for the common uplink scheduling information when the base station configures the common uplink scheduling information for the user equipment, or may be pre-configured. This is not specifically limited herein.

In step 1101, a manner of obtaining, by the user equipment, the common uplink scheduling information configured by the base station includes but is not limited to the following:
The user equipment obtains, on a scrambled PDCCH, the common uplink scheduling information sent by the base station, where the scrambled PDCCH is obtained after the base station scrambles, by using the G-RNTI, the PDCCH; or
the user equipment receives radio resource control RRC signaling sent by the base station, where the RRC signaling carries the common uplink scheduling information; or
the user equipment receives a system message sent by the base station, where the system message carries the common uplink scheduling information.

Step 1102: When needing to send uplink data to the base station, the user equipment sends the uplink data and uplink control information to the base station by using the common uplink scheduling information.

In step 1102, if the user equipment determines, before sending the uplink data and the uplink control information to the base station, that uplink data other than the uplink data further needs to be sent, the user equipment may further send a buffer status report BSR, the uplink data, and the uplink control information to the base station together by using the common uplink scheduling information.

The BSR is used to represent that the user equipment further needs to send the uplink data other than the uplink data that is already sent, and requests the base station to perform uplink scheduling again for the other uplink data that is of the user equipment and that needs to be sent.

In this case, the base station may perform, for the other uplink data that is of the user equipment and that needs to be sent, uplink scheduling specific to the user equipment, so that the user equipment sends, to the base station by using dedicated uplink scheduling information, the other uplink data that needs to be sent.

It should be noted that, the uplink control information (UCI for short) includes a C-RNTI of a user equipment, and may further include other control information such as modulation and coding scheme MCS or an MSC-offset (offset). This is not specifically limited herein.

It should be noted that, when sending the UCI, the user equipment needs to determine, according to configuration of the base station, a time-frequency location that is occupied by the UCI on the common PUSCH. A method for configuring, by the base station, the time-frequency location of the UCI may be any one of methods for configuring common uplink scheduling information. This is not specifically limited herein.

Manners of determining the time-frequency location of the UCI include but are not limited to the following:
Manner 1: Four orthogonal frequency division multiplexing (, OFDM for short) symbols adjacent to an uplink pilot that are in a physical resource occupied by the common PUSCH are selected as the time-frequency location that is occupied by the UCI on the common PUSCH.
Manner 2: An Resource Block is selected, in a manner preset by a system, as the time-frequency location that is occupied by the UCI on the common PUSCH. In this manner, for the UCI, a fixed modulation scheme is used and a bit rate is fixed.

Step 1103: The user equipment receives acknowledgement/negative acknowledgement information sent by the base station, and determines, according to the acknowledgement/negative acknowledgement information, whether the uplink data needs to be sent to the base station again.

In step 1103, a manner of receiving, by the user equipment, the acknowledgement/negative acknowledgement information sent by the base station includes but is not limited to the following:
The user equipment receives, on the scrambled PDCCH, downlink scheduling information sent by the base station, and when descrambling the scrambled PDCCH by using the G-RNTI, successfully receiving the scrambled PDCCH, and determining that a C-RNTI carried on a PDSCH indicated in the downlink scheduling information is the same as the C-RNTI of the user equipment, obtains, on the PDSCH indicated in the downlink scheduling information, the acknowledgement/negative acknowledgement information sent by the base station; or
the user equipment receives, on the scrambled PDCCH, downlink scheduling information sent by the base station, and when descrambling the scrambled PDCCH by using the C-RNTI and successfully receiving the scrambled PDCCH, obtains, on a PDSCH indicated in the downlink scheduling information, the acknowledgement/negative acknowledgement information sent by the base station; or
the user equipment receives a physical HARQ indicator channel PHICH sent by the base station, and when determining that a C-RNTI corresponding to the PHICH is the same as the C-RNTI of the user equipment, obtains, from the PHICH, the acknowledgement/negative acknowledgement information sent by the base station.

When receiving the NACK information sent by the base station device, the user equipment determines that the uplink data sent in step 1102 needs to be sent to the base station device again.

In the implementation manner in the present invention, user equipment obtains common uplink scheduling information configured by a base station, and when needing to send uplink data to the base station, sends the uplink data and uplink control information to the base station by using the common uplink scheduling information. In this way, user equipment sends uplink data to a base station by using common uplink scheduling information. Compared with the foregoing implementation manner, this further omits a transmission procedure for sending control information between the user equipment and the base station, so that a data transmission delay is reduced, and system performance is improved.

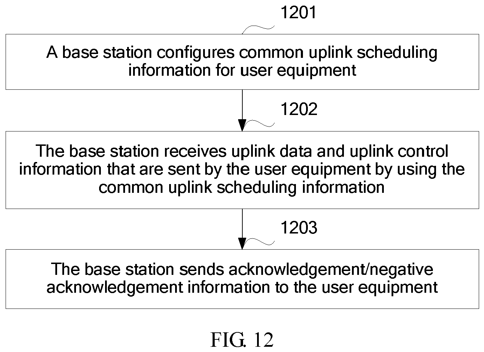

As shown in FIG. 12, FIG. 12 is a schematic flowchart of a data transmission method according to an embodiment of the present invention. The method may be as follows.

Step 1201: A base station configures common uplink scheduling information for user equipment.

The common uplink scheduling information includes a common physical uplink shared channel PUSCH, and the common PUSCH is used to represent a PUSCH that can be shared by multiple user equipments.

The common uplink scheduling information may further include one or more of a pilot root sequence or shift information. This is not specifically limited herein.

It should be noted that, for the common uplink scheduling information, the base station configures a group radio network temporary identifier (English: Radio Network Temporary Identifier, G-RNTI for short) for the user equipment. The G-RNTI represents an RNTI corresponding to the foregoing common uplink scheduling information that can be shared by multiple user equipments.

The G-RNTI may be generated synchronously by the base station for the common uplink scheduling information when the base station configures the common uplink scheduling information for the user equipment, or may be pre-configured. This is not specifically limited herein.

Specifically, a manner of configuring, by the base station, the common uplink scheduling information for the user equipment includes but is not limited to the following:
The base station scrambles a physical downlink control channel PDCCH by using the G-RNTI, and sends the common uplink scheduling information to the user equipment by using the scrambled PDCCH; or
the base station sends radio resource control RRC signaling to the user equipment, where the RRC signaling carries the common uplink scheduling information; or
the base station sends a system message to the user equipment, where the system message carries the common uplink scheduling information.

Step 1202: The base station receives uplink data and uplink control information that are sent by the user equipment by using the common uplink scheduling information.

An implementation manner in step 1202 is the same as the manner described in step 1102 depicted in FIG. 11, and details are not described herein again.

Step 1203: The base station sends acknowledgement/negative acknowledgement information to the user equipment.

An implementation manner in step 1203 is the same as the manner described in step 1103 depicted in FIG. 11, and details are not described herein again.

Optionally, if the base station device sends the negative acknowledgement information to the user equipment, the base station allocates dedicated uplink scheduling information to the user equipment, and sends the dedicated uplink scheduling information to the user equipment by using a PDCCH that is scrambled by using a C-RNTI, so that the user equipment can send the uplink data described in step 1202 to the base station again by using the dedicated uplink scheduling information.

In the implementation manner in the present invention, a base station configures common uplink scheduling information for user equipment, and when needing to send uplink data to the base station, the user equipment sends the uplink data and uplink control information to the base station by using the common uplink scheduling information. In this way, user equipment sends uplink data to a base station by using common uplink scheduling information. Compared with the foregoing implementation manner, this further omits a transmission procedure for sending control information between the user equipment and the base station, so that a data transmission delay is reduced, and system performance is improved.

Persons skilled in the art should understand that the embodiments of the present invention may be provided as a method, an apparatus (a device), or a computer program product. Therefore, the present invention may use a form of hardware only embodiments, software only embodiments, or embodiments with a combination of software and hardware. In addition, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the apparatus (device), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may also be stored in a computer readable memory that can instruct the computer or another programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Apparently, persons skilled in the art can make various modifications and variations to the present invention without departing from the scope of the present invention. Therefore, the present invention is intended to cover these modifications and variations provided that they fall within the scope of the claims of the present invention and their equivalent technologies.

## Claims

1. A terminal, comprising:
a sending module (11), configured to, when uplink data needs to be sent to a base station, send control information to the base station by using an uplink transmission resource, wherein the control information is used to request the base station to perform uplink scheduling for the uplink data of the terminal; and
a receiving module (12), configured to receive uplink scheduling information from the base station for the control information; wherein
the sending module is further configured to send the uplink data to the base station by using the uplink scheduling information;
wherein:
the control information comprises a buffer status report, BSR, and the uplink transmission resource comprises common uplink scheduling information;
the receiving module is further configured to receive the common uplink scheduling information from the base station, wherein the common uplink scheduling information comprises a common physical uplink shared channel, PUSCH, and the common PUSCH is used to represent a PUSCH that can be shared by multiple terminals; and
the sending module is configured to send the BSR and a cell radio network temporary identifier, C-RNTI, of the terminal to the base station by using the common uplink scheduling information.

2. The terminal according to claim 1, wherein:
the receiving module is further configured to receive a group radio network temporary identifier G-RNTI configured by the base station, wherein the G-RNTI represents an RNTI that is configured by the base station and that is corresponding to the common uplink scheduling information shared by multiple user equipment; and
the receiving module is specifically configured to: receive, on a scrambled physical downlink control channel PDCCH, the uplink scheduling information that is sent by the base station and is for the control information;
descramble the scrambled PDCCH by using the G-RNTI;
when the scrambled PDCCH is successfully received, obtain downlink scheduling information from the scrambled PDCCH, wherein the downlink scheduling information indicates a physical downlink shared channel PDSCH that carries uplink scheduling information and a C-RNTI of target user equipment that uses the uplink scheduling information; and
when it is determined that the C-RNTI that is carried on the PDSCH and is of the target user equipment that uses the uplink scheduling information is the same as the C-RNTI of the user equipment, determine that the uplink scheduling information carried on the PDSCH is the uplink scheduling information of the user equipment.

3. The terminal according to claim 2, wherein:
the receiving module is specifically configured to: obtain, on the scrambled PDCCH, the common uplink scheduling information sent by the base station, wherein the scrambled PDCCH is obtained after the base station scrambles, by using the G-RNTI, the PDCCH; or
receive radio resource control RRC signaling sent by the base station, wherein the RRC signaling carries the common uplink scheduling information; or
receive a system message sent by the base station, wherein the system message carries the common uplink scheduling information.

4. Abase station, comprising:
a receiving module (21), configured to receive control information from a terminal by using an uplink transmission resource, wherein the control information is used to request the base station to perform uplink scheduling for to-be-sent data of the terminal; and
a sending module (22), configured to send uplink scheduling information for the control information to the terminal according to the control information; wherein
the receiving module is further configured to receive uplink data from the terminal by using the uplink scheduling information;
wherein:
the sending module is further configured to configure common uplink scheduling information for the terminal, wherein the common uplink scheduling information comprises a common physical uplink shared channel, PUSCH, and the common PUSCH is used to represent a PUSCH that can be shared by multiple terminals; and
the receiving module is configured to receive the control information and a cell radio network temporary identifier, C-RNTI, of the terminal from the terminal by using the common uplink scheduling information, wherein the control information comprises a buffer status report, BSR.

5. The base station according to claim 4, wherein:
the sending module is further configured to configure a group radio network temporary identifier G-RNTI for the user equipment, wherein the G-RNTI represents an RNTI that is configured by the base station and that is corresponding to the common uplink scheduling information shared by multiple user equipments; and
the sending module is specifically configured to: scramble a physical downlink control channel PDCCH by using the G-RNTI, and configure the common uplink scheduling information for the user equipment by using the scrambled PDCCH; or
send radio resource control RRC signaling to the user equipment, wherein the RRC signaling carries the common uplink scheduling information; or
send a system message to the user equipment, wherein the system message carries the common uplink scheduling information.

6. The base station according to claim 4 or 5, wherein:
the sending module is specifically configured to: allocate the uplink scheduling information to the user equipment according to the control information;
carry the uplink scheduling information and the C-RNTI of the user equipment on a physical downlink shared channel PDSCH indicated in downlink scheduling information; and
scramble, by using the G-RNTI, the physical downlink control channel PDCCH that carries the downlink scheduling information, and send the scrambled PDCCH to the user equipment, wherein the downlink scheduling information comprises the PDSCH.

7. A data transmission method, comprising:
sending, by a terminal (1102), when needing to send uplink data to a base station, control information to the base station by using an uplink transmission resource, wherein the control information is used to request the base station to perform uplink scheduling for the to-be-sent data of the terminal;
receiving (1103), by the terminal, uplink scheduling information from the base station for the control information; and
sending, by the terminal, uplink data to the base station by using the uplink scheduling information.
wherein the control information comprises a buffer status report BSR, and the uplink transmission resource comprises common uplink scheduling information; and
the sending control information to the base station by using an uplink transmission resource comprises:
receiving (1101), by the terminal, the common uplink scheduling information, wherein the common uplink scheduling information comprises a common physical uplink shared channel, PUSCH, and the common PUSCH is used to represent a PUSCH that can be shared by multiple terminals; and
sending, by the terminal, the BSR and a cell radio network temporary identifier, C-RNTI, of the terminal to the base station by using the common uplink scheduling information.

8. The data transmission method according to claim 7, wherein the method further comprises:
receiving, by the user equipment, a group radio network temporary identifier G-RNTI configured by the base station, wherein the G-RNTI represents an RNTI that is configured by the base station and that is corresponding to the common uplink scheduling information shared by multiple user equipments; and
the receiving, by the user equipment, uplink scheduling information that is returned by the base station for the control information comprises:
receiving, by the user equipment on a scrambled physical downlink control channel PDCCH, the uplink scheduling information that is sent by the base station and is for the control information;
descrambling, by the user equipment, the scrambled PDCCH by using the G-RNTI;
when successfully receiving the scrambled PDCCH, obtaining, by the user equipment, downlink scheduling information from the scrambled PDCCH, wherein the downlink scheduling information indicates a physical downlink shared channel PDSCH that carries uplink scheduling information and a C-RNTI of target user equipment that uses the uplink scheduling information; and
when determining that the C-RNTI that is carried on the PDSCH and is of the target user equipment that uses the uplink scheduling information is the same as the C-RNTI of the user equipment, determining, by the user equipment, that the uplink scheduling information carried on the PDSCH is the uplink scheduling information of the user equipment.

9. The data transmission method according to claim 8, wherein the obtaining, by the user equipment, the common uplink scheduling information sent by the base station comprises:
obtaining, by the user equipment on the scrambled PDCCH, the common uplink scheduling information sent by the base station, wherein the scrambled PDCCH is obtained after the base station scrambles, by using the G-RNTI, the PDCCH; or
receiving, by the user equipment, radio resource control RRC signaling sent by the base station, wherein the RRC signaling carries the common uplink scheduling information; or
receiving, by the user equipment, a system message sent by the base station, wherein the system message carries the common uplink scheduling information.

10. A data transmission method, comprising:
receiving (1202), by a base station, control information from a terminal by using an uplink transmission resource, wherein the control information is used to request the base station to perform uplink scheduling for to-be-sent data of the terminal;
sending (1203), by the base station, uplink scheduling information for the control information to the terminal according to the control information; and
receiving, by the base station, uplink data from the terminal by using the uplink scheduling information.
wherein the method further comprises:
configuring (1201), by the base station, common uplink scheduling information for the terminal, wherein the common uplink scheduling information comprises a common physical uplink shared channel, PUSCH, and the common PUSCH is used to represent a PUSCH that can be shared by multiple terminals; and
the receiving, by a base station, control information from the terminal by using an uplink transmission resource comprises:
receiving, by the base station, the control information and a cell radio network temporary identifier, C-RNTI, of the terminal from the terminal by using the common uplink scheduling information, wherein the control information comprises a buffer status report BSR;
wherein the sending, by the base station, uplink scheduling information for the control information to the terminal according to the control information comprises:
scrambling, by the base station, by using the C-RNTI of the terminal, the physical downlink control channel, PDCCH, that carries the uplink scheduling information, and sending the scrambled PDCCH to the terminal;

11. The data transmission method according to claim 10, wherein the method further comprises:
configuring, by the base station, a group radio network temporary identifier G-RNTI for the user equipment, wherein the G-RNTI represents an RNTI that is configured by the base station and that is corresponding to the common uplink scheduling information shared by multiple user equipments; and
the sending, by the base station, common uplink scheduling information for the user equipment comprises:
scrambling, by the base station, a physical downlink control channel PDCCH by using the G-RNTI, and configuring the common uplink scheduling information for the user equipment by using the scrambled PDCCH;
sending, by the base station, radio resource control RRC signaling to the user equipment, wherein the RRC signaling carries the common uplink scheduling information; or
sending, by the base station, a system message to the user equipment, wherein the system message carries the common uplink scheduling information.

12. The data transmission method according to claim 10 or 11, wherein the sending, by the base station, uplink scheduling information for the control information to the user equipment according to the control information comprises:
allocating, by the base station, the uplink scheduling information to the user equipment according to the control information;
carrying, by the base station, the uplink scheduling information and the C-RNTI of the user equipment on a physical downlink shared channel PDSCH indicated in downlink scheduling information; and
scrambling, by using the G-RNTI, the physical downlink control channel PDCCH that carries the downlink scheduling information, and sending the scrambled PDCCH to the user equipment, wherein the downlink scheduling information indicates the PDSCH.

13. A computer program product comprising program instructions which, when executed by a computer, cause the computer to carry out the steps of the method according to any claims 7 to 9 or the method according to any of claims 10 to 12.

## Patentansprüche

1. Endgerät, das Folgendes umfasst:
ein Sendemodul (11), das konfiguriert ist, dann, wenn Aufwärtsstreckendaten zu einer Basisstation gesendet werden müssen, Steuerinformationen unter Verwendung eines Aufwärtsstreckenübertragungsbetriebsmittels zur Basisstation zu senden, wobei die Steuerinformationen verwendet werden, um anzufordern, dass die Basisstation ein Aufwärtsstreckenplanen für die Aufwärtsstreckendaten des Endgerätes durchführt; und
ein Empfangsmodul (12), das konfiguriert ist, Aufwärtsstreckenplanungsinformationen für die Steuerinformationen von der Basisstation zu empfangen; wobei
das Sendemodul ferner konfiguriert ist, die Aufwärtsstreckendaten unter Verwendung der Aufwärtsstreckenplanungsinformationen zur Basisstation zu senden; wobei
die Steuerinformationen einen Pufferzustandsbericht, BSR, umfassen und das Aufwärtsstreckenübertragungsbetriebsmittel gemeinsame Aufwärtsstreckenplanungsinformationen umfasst;
das Empfangsmodul ferner konfiguriert ist, die gemeinsamen Aufwärtsstreckenplanungsinformationen von der Basisstation zu empfangen, wobei die gemeinsamen Aufwärtsstreckenplanungsinformationen einen gemeinsamen gemeinsam verwendeten physischen Aufwärtsstreckenkanal, gemeinsamen PUSCH, umfassen und der gemeinsame PUSCH verwendet wird, einen PUSCH zu repräsentieren, der durch mehrere Endgeräte gemeinsam verwendet werden kann; und
das Sendemodul konfiguriert ist, den BSR und eine temporäre Zellfunknetzkennung, C-RNTI, des Endgerätes unter Verwendung der gemeinsamen Aufwärtsstreckenplanungsinformationen zur Basisstation zu senden.

2. Endgerät nach Anspruch 1, wobei
das Empfangsmodul ferner konfiguriert ist, eine temporäre Gruppenfunknetzkennung, G-RNTI, die durch die Basisstation konfiguriert ist, zu empfangen, wobei die G-RNTI eine RNTI, die durch die Basisstation konfiguriert ist und die den gemeinsamen Aufwärtsstreckenplanungsinformationen, die durch mehrere Anwendergeräte gemeinsam verwendet werden, entspricht, repräsentiert; und
das Empfangsmodul speziell konfiguriert ist, auf einem verschlüsselten physischen Abwärtsstreckensteuerkanal, verschlüsselter PDCCH, die Aufwärtsstreckenplanungsinformationen, die durch die Basisstation gesendet wurden und die für die Steuerinformationen gelten, zu empfangen;
den verschlüsselten PDCCH unter Verwendung der G-RNTI zu entschlüsseln; dann, wenn der verschlüsselte PDCCH erfolgreich empfangen wurde, die Abwärtsstreckenplanungsinformationen vom verschlüsselten PDCCH zu erhalten, wobei die Abwärtsstreckenplanungsinformationen einen physischen, gemeinsam verwendeten Abwärtsstreckenkanal, PDSCH, der Aufwärtsstreckenplanungsinformationen führt, und eine C-RNTI von einem Zielanwendergerät, das die Aufwärtsstreckenplanungsinformationen verwendet, anzeigen; und
dann, wenn bestimmt wird, dass die C-RNTI, die im PDSCH geführt wird und vom Zielanwendergerät, das die Aufwärtsstreckenplanungsinformationen verwendet, ist, dieselbe wie die C-RNTI des Anwendergerätes ist, zu bestimmen, dass die Aufwärtsstreckenplanungsinformationen, die im PDSCH geführt werden, die Aufwärtsstreckenplanungsinformationen des Anwendergerätes sind.

3. Endgerät nach Anspruch 2, wobei
das Empfangsmodul speziell konfiguriert ist, im verschlüsselten PDCCH die gemeinsamen Aufwärtsstreckenplanungsinformationen, die durch die Basisstation gesendet wurden, zu erhalten, wobei der verschlüsselte PDCCH erhalten wird, nachdem die Basisstation unter Verwendung der G-RNTI den PDCCH verschlüsselt hat;
eine Funkbetriebsmittelsteuersignalisierung, RRC-Signalisierung, die durch die Basisstation gesendet wurde, zu empfangen, wobei die RRC-Signalisierung die gemeinsamen Aufwärtsstreckenplanungsinformationen führt; oder
eine Systemnachricht, die durch die Basisstation gesendet wurde, zu empfangen, wobei die Systemnachricht die gemeinsamen Aufwärtsstreckenplanungsinformationen führt.

4. Basisstation, die Folgendes umfasst:
ein Empfangsmodul (21), das konfiguriert ist, Steuerinformationen unter Verwendung eines Aufwärtsstreckenübertragungsbetriebsmittels von einem Endgerät zu empfangen, wobei die Steuerinformationen verwendet werden, um anzufordern, dass die Basisstation ein Aufwärtsstreckenplanen für die zu sendenden Daten des Endgerätes durchführt; und
ein Sendemodul (22), das konfiguriert ist, Aufwärtsstreckenplanungsinformationen für die Steuerinformationen gemäß den Steuerinformationen zum Endgerät zu senden; wobei
das Empfangsmodul ferner konfiguriert ist, Aufwärtsstreckendaten unter Verwendung der Aufwärtsstreckenplanungsinformationen vom Endgerät zu empfangen; wobei
das Sendemodul ferner konfiguriert ist, gemeinsame Aufwärtsstreckenplanungsinformationen für das Endgerät zu konfigurieren, wobei die gemeinsamen Aufwärtsstreckenplanungsinformationen einen gemeinsamen gemeinsam verwendeten physischen Aufwärtsstreckenkanal, gemeinsamen PUSCH, umfassen und der gemeinsame PUSCH verwendet wird, einen PUSCH zu repräsentieren, der von mehreren Endgeräten gemeinsam verwendet werden kann; und
das Empfangsmodul konfiguriert ist, die Steuerinformationen und eine temporäre Zellfunknetzkennung, C-RNTI, des Endgerätes unter Verwendung der gemeinsamen Aufwärtsstreckenplanungsinformationen vom Endgerät zu empfangen, wobei die Steuerinformationen einen Pufferzustandsbericht, BSR, umfassen.

5. Basisstation nach Anspruch 4, wobei
das Sendemodul ferner konfiguriert ist, eine temporäre Gruppenfunknetzkennung, G-RNTI, für das Anwendergerät zu konfigurieren, wobei die G-RNTI eine RNTI, die durch die Basisstation konfiguriert ist und die den gemeinsamen Aufwärtsstreckenplanungsinformationen, die durch mehrere Anwendergeräte gemeinsam verwendet werden, entspricht, repräsentiert; und
das Sendemodul speziell konfiguriert ist, einen physischen Abwärtsstreckensteuerkanal, PDCCH, unter Verwendung des G-RNTI zu verschlüsseln und die gemeinsamen Aufwärtsstreckenplanungsinformationen für das Anwendergerät unter Verwendung des verschlüsselten PDCCH zu konfigurieren;
eine Funkbetriebsmittelsteuersignalisierung, RRC-Signalisierung, zum Anwendergerät zu senden, wobei die RRC-Signalisierung die gemeinsamen Aufwärtsstreckenplanungsinformationen führt; oder
eine Systemnachricht zum Anwendergerät zu senden, wobei die Systemnachricht die gemeinsamen Aufwärtsstreckenplanungsinformationen führt.

6. Basisstation nach Anspruch 4 oder 5, wobei
das Sendemodul speziell konfiguriert ist, die Aufwärtsstreckenplanungsinformationen gemäß den Steuerinformationen dem Anwendergerät zuzuordnen;
die Aufwärtsstreckenplanungsinformationen und die C-RNTI des Anwendergerätes in einem physischen, gemeinsam verwendeten Abwärtsstreckenkanal, PDSCH, der in den Abwärtsstreckenplanungsinformationen angezeigt ist, zu führen; und unter Verwendung der G-RNTI den physischen Abwärtsstreckensteuerkanal, PDCCH, der die Abwärtsstreckenplanungsinformationen führt, zu verschlüsseln und den verschlüsselten PDCCH zum Anwendergerät zu senden, wobei die Abwärtsstreckenplanungsinformationen den PDSCH umfassen.

7. Datenübertragungsverfahren, das Folgendes umfasst:
Senden durch ein Endgerät (1102) dann, wenn Aufwärtsstreckendaten zu einer Basisstation gesendet werden müssen, von Steuerinformationen unter Verwendung eines Aufwärtsstreckenübertragungsbetriebsmittels zur Basisstation, wobei die Steuerinformationen verwendet werden, um anzufordern, dass die Basisstation ein Aufwärtsstreckenplanen für die zu sendenden Daten des Endgerätes durchführt;
Empfangen (1103) durch das Endgerät von Aufwärtsstreckenplanungsinformationen für die Steuerinformationen von der Basisstation für die Steuerinformationen; und
Senden durch das Endgerät von Aufwärtsstreckendaten unter Verwendung der Aufwärtsstreckenplanungsinformationen zur Basisstation, wobei die Steuerinformationen einen Pufferzustandsbericht, BSR, umfassen und das Aufwärtsstreckenübertragungsbetriebsmittel gemeinsame Aufwärtsstreckenplanungsinformationen umfasst; und
das Senden von Steuerinformationen unter Verwendung eines Aufwärtsstreckenübertragungsbetriebsmittels Folgendes umfasst:
Empfangen (1101) durch das Endgerät der gemeinsamen Aufwärtsstreckenplanungsinformationen, wobei die gemeinsamen Aufwärtsstreckenplanungsinformationen einen gemeinsamen gemeinsam verwendeten physischen Aufwärtsstreckenkanal, gemeinsamen PUSCH, umfassen und der gemeinsame PUSCH verwendet wird, einen PUSCH zu repräsentieren, der durch mehrere Endgeräte gemeinsam verwendet werden kann; und
Senden durch das Endgerät des BSR und einer temporären Zellfunknetzkennung, C-RNTI, des Endgerätes unter Verwendung der gemeinsamen Aufwärtsstreckenplanungsinformationen zur Basisstation.

8. Datenübertragungsverfahren nach Anspruch 7, wobei das Verfahren ferner Folgendes umfasst:
Empfangen durch das Anwendergerät einer temporären Gruppenfunknetzkennung, G-RNTI, die durch die Basisstation konfiguriert ist, wobei die G-RNTI eine RNTI, die durch die Basisstation konfiguriert ist und die den gemeinsamen Aufwärtsstreckenplanungsinformationen, die durch mehrere Anwendergeräte gemeinsam verwendet werden, entspricht, repräsentiert; und
das Empfangen durch das Anwendergerät von Aufwärtsstreckenplanungsinformationen, die durch die Basisstation für die Steuerinformationen zurückgegeben werden, Folgendes umfasst:
Empfangen durch das Anwendergerät auf einem verschlüsselten physischen Abwärtsstreckensteuerkanal, verschlüsselter PDCCH, der Aufwärtsstreckenplanungsinformationen, die durch die Basisstation gesendet wurden und die für die Steuerinformationen gelten;
Entschlüsseln durch das Anwendergerät der verschlüsselten PDCCH unter Verwendung der G-RNTI;
dann, wenn der verschlüsselte PDCCH erfolgreich empfangen wurde, Erhalten durch das Anwendergerät der Abwärtsstreckenplanungsinformationen vom verschlüsselten PDCCH, wobei die Abwärtsstreckenplanungsinformationen einen physischen, gemeinsam verwendeten Abwärtsstreckenkanal, PDSCH, der Aufwärtsstreckenplanungsinformationen führt, und eine C-RNTI von einem Zielanwendergerät, das die Aufwärtsstreckenplanungsinformationen verwendet, anzeigen; und
dann, wenn bestimmt wird, dass die C-RNTI, die im PDSCH geführt wird und vom Zielanwendergerät, das die Aufwärtsstreckenplanungsinformationen verwendet, ist, dieselbe wie die C-RNTI des Anwendergerätes ist, Bestimmen durch das Anwendergerät, dass die Aufwärtsstreckenplanungsinformationen, die im PDSCH geführt werden, die Aufwärtsstreckenplanungsinformationen des Anwendergerätes sind.

9. Datenübertragungsverfahren nach Anspruch 8, wobei das Erhalten durch das Anwendergerät der gemeinsamen Aufwärtsstreckenplanungsinformationen, die durch die Basisstation gesendet wurden, Folgendes umfasst:
Erhalten durch das Anwendergerät im verschlüsselten PDCCH der gemeinsamen Aufwärtsstreckenplanungsinformationen, die durch die Basisstation gesendet wurden, wobei der verschlüsselte PDCCH erhalten wird, nachdem die Basisstation unter Verwendung der G-RNTI den PDCCH verschlüsselt hat;
Empfangen durch das Anwendergerät einer Funkbetriebsmittelsteuersignalisierung, RRC-Signalisierung, die durch die Basisstation gesendet wurde, wobei die RRC-Signalisierung die gemeinsamen Aufwärtsstreckenplanungsinformationen führt; oder
Empfangen durch das Anwendergerät einer Systemnachricht, die durch die Basisstation gesendet wurde, wobei die Systemnachricht die gemeinsamen Aufwärtsstreckenplanungsinformationen führt.

10. Datenübertragungsverfahren, das Folgendes umfasst:
Empfangen (1202) durch eine Basisstation von Steuerinformationen unter Verwendung eines Aufwärtsstreckenübertragungsbetriebsmittels von einem Endgerät, wobei die Steuerinformationen verwendet werden, um anzufordern, dass die Basisstation ein Aufwärtsstreckenplanen für die zu sendenden Daten des Endgerätes durchführt;
Senden (1203) durch die Basisstation von Aufwärtsstreckenplanungsinformationen für die Steuerinformationen gemäß den Steuerinformationen zum Endgerät; und
Empfangen durch die Basisstation von Aufwärtsstreckendaten unter Verwendung der Aufwärtsstreckenplanungsinformationen vom Endgerät, wobei das Verfahren ferner Folgendes umfasst:
Konfigurieren (1201) durch die Basisstation von gemeinsamen Aufwärtsstreckenplanungsinformationen für das Endgerät, wobei die gemeinsamen Aufwärtsstreckenplanungsinformationen einen gemeinsamen gemeinsam verwendeten physischen Aufwärtsstreckenkanal, gemeinsamen PUSCH, umfassen und der gemeinsame PUSCH verwendet wird, einen PUSCH zu repräsentieren, der von mehreren Endgeräten gemeinsam verwendet werden kann; und
das Empfangen durch eine Basisstation von Steuerinformationen vom Endgerät unter Verwendung eines Aufwärtsstreckenübertragungsbetriebsmittels Folgendes umfasst:
Empfangen durch die Basisstation der Steuerinformationen und einer temporären Zellfunknetzkennung, C-RNTI, des Endgerätes unter Verwendung der gemeinsamen Aufwärtsstreckenplanungsinformationen vom Endgerät, wobei die Steuerinformationen einen Pufferzustandsbericht, BSR, umfassen; wobei
das Senden durch die Basisstation der Aufwärtsstreckenplanungsinformationen für die Steuerinformationen gemäß den Steuerinformationen zum Endgerät Folgendes umfasst:
Verschlüsseln durch die Basisstation unter Verwendung des C-RNTI des Endgerätes des physischen Abwärtsstreckensteuerkanals, PDCCH, der die Aufwärtsstreckenplanungsinformationen führt, und Senden des verschlüsselten PDCCH zum Endgerät.

11. Datenübertragungsverfahren nach Anspruch 10, wobei das Verfahren ferner Folgendes umfasst:
Konfigurieren durch die Basisstation einer temporären Gruppenfunknetzkennung, G-RNTI, für das Anwendergerät, wobei die G-RNTI eine RNTI, die durch die Basisstation konfiguriert ist und die den gemeinsamen Aufwärtsstreckenplanungsinformationen, die durch mehrere Anwendergeräte gemeinsam verwendet werden, entspricht, repräsentiert; und
das Senden durch die Basisstation gemeinsamer Aufwärtsstreckenplanungsinformationen für das Anwendergerät Folgendes umfasst:
Verschlüsseln durch die Basisstation eines physischen Abwärtsstreckensteuerkanals, PDCCH, unter Verwendung des G-RNTI und Konfigurieren der gemeinsamen Aufwärtsstreckenplanungsinformationen für das Anwendergerät unter Verwendung des verschlüsselten PDCCH;
Senden durch die Basisstation einer Funkbetriebsmittelsteuersignalisierung, RRC-Signalisierung, zum Anwendergerät, wobei die RRC-Signalisierung die gemeinsamen Aufwärtsstreckenplanungsinformationen führt; oder
Senden durch die Basisstation einer Systemnachricht zum Anwendergerät, wobei die Systemnachricht die gemeinsamen Aufwärtsstreckenplanungsinformationen führt.

12. Datenübertragungsverfahren nach Anspruch 10 oder 11, wobei das Senden durch die Basisstation von Aufwärtsstreckenplanungsinformationen für die Steuerinformationen gemäß den Steuerinformationen zum Anwendergerät Folgendes umfasst:
Zuordnen durch die Basisstation der Aufwärtsstreckenplanungsinformationen gemäß den Steuerinformationen zum Anwendergerät;
Führen durch die Basisstation der Aufwärtsstreckenplanungsinformationen und der C-RNTI des Anwendergerätes in einem physischen, gemeinsam verwendeten Abwärtsstreckenkanal, PDSCH, der in den Abwärtsstreckenplanungsinformationen angezeigt ist; und
Verschlüsseln durch die G-RNTI des physischen Abwärtsstreckensteuerkanals, PDCCH, der die Abwärtsstreckenplanungsinformationen führt, und Senden des verschlüsselten PDCCH zum Anwendergerät, wobei die Abwärtsstreckenplanungsinformationen den PDSCH anzeigen.

13. Computerprogrammprodukt, das Programmanweisungen enthält, die, wenn sie durch einen Computer ausgeführt werden, bewirken, dass der Computer die Schritte des Verfahrens nach einem der Ansprüche 7 bis 9 oder das Verfahren nach einem der Ansprüche 10 bis 12 ausführt.

## Revendications

1. Terminal, comprenant :
un module d'envoi (11), configuré pour, lorsque des données de liaison montante doivent être envoyées à une station de base, envoyer des informations de commande à la station de base en utilisant une ressource de transmission de liaison montante, dans lequel les informations de commande sont utilisées pour demander à la station de base d'effectuer une programmation de liaison montante pour les données de liaison montante du terminal ; et
un module de réception (12), configuré pour recevoir des informations de programmation de liaison montante à partir de la station de base pour les informations de commande ; dans lequel
le module d'envoi est en outre configuré pour envoyer les données de liaison montante à la station de base en utilisant les informations de programmation de liaison montante ;
dans lequel :
les informations de commande comprennent un rapport d'état de tampon, BSR, et la ressource de transmission de liaison montante comprend des informations de programmation de liaison montante communes ;
le module de réception est en outre configuré pour recevoir les informations de programmation de liaison montante communes à partir de la station de base, dans lequel les informations de programmation de liaison montante communes comprennent un canal physique partagé de liaison montante, PUSCH, commun, et le PUSCH commun est utilisé pour représenter un PUSCH qui peut être partagé par de multiples terminaux ; et
le module d'envoi est configuré pour envoyer le BSR et un identificateur temporaire de réseau radio cellulaire, C-RNTI, du terminal à la station de base en utilisant les informations de programmation de liaison montante communes.

2. Terminal selon la revendication 1, dans lequel :
le module de réception est en outre configuré pour recevoir un identificateur temporaire de réseau radio de groupe, G-RNTI, configuré par la station de base, dans lequel le G-RNTI représente un RNTI qui est configuré par la station de base et qui correspond aux informations de programmation de liaison montante communes partagées par de multiples équipements utilisateurs ; et
le module de réception est spécifiquement configuré pour : recevoir, sur un canal de commande physique de liaison descendante, PDCCH, brouillé, les informations de programmation de liaison montante qui sont envoyées par la station de base et qui sont pour les informations de commande ;
désembrouiller le PDCCH brouillé en utilisant le G-RNTI ;
lorsque le PDCCH brouillé est reçu avec succès, obtenir des informations de programmation de liaison descendante à partir du PDCCH brouillé, dans lequel les informations de programmation de liaison descendante indiquent un canal physique partagé de liaison descendante, PDSCH, qui transporte des informations de programmation de liaison montante et un C-RNTI d'équipement utilisateur cible qui utilise les informations de programmation de liaison montante ; et
lorsqu'il est déterminé que le C-RNTI qui est transporté sur le PDSCH et qui est celui de l'équipement utilisateur cible qui utilise les informations de programmation de liaison montante est identique au C-RNTI de l'équipement d'utilisateur, déterminer que les informations de programmation de liaison montante transportées sur le PDSCH sont les informations de programmation de liaison montante de l'équipement utilisateur.

3. Terminal selon la revendication 2, dans lequel :
le module de réception est spécifiquement configuré pour : obtenir, sur le PDCCH brouillé, les informations de programmation de liaison montante communes envoyées par la station de base, dans lequel le PDCCH brouillé est obtenu après le brouillage du PDCCH par la station de base, en utilisant le G-RNTI ; ou
recevoir une signalisation de gestion des ressources radio, RRC, envoyée par la station de base, dans lequel la signalisation RRC transporte les informations de programmation de liaison montante communes ; ou
recevoir un message système envoyé par la station de base, dans lequel le message système transporte les informations de programmation de liaison montante communes.

4. Station de base, comprenant :
un module de réception (21), configuré pour recevoir des informations de commande à partir d'un terminal en utilisant une ressource de transmission de liaison montante, dans laquelle les informations de commande sont utilisées pour demander à la station de base d'effectuer une programmation de liaison montante pour des données à envoyer du terminal ; et
un module d'envoi (22), configuré pour envoyer des informations de programmation de liaison montante pour les informations de commande au terminal en fonction des informations de commande ; dans laquelle
le module de réception est en outre configuré pour recevoir des données de liaison montante à partir du terminal en utilisant les informations de programmation de liaison montante ;
dans laquelle :
le module d'envoi est en outre configuré pour configurer des informations de programmation de liaison montante communes pour le terminal, dans laquelle les informations de programmation de liaison montante communes comprennent un canal physique partagé de liaison montante, PUSCH, commun, et le PUSCH commun est utilisé pour représenter un PUSCH qui peut être partagé par de multiples terminaux ; et
le module de réception est configuré pour recevoir les informations de commande et un identificateur temporaire de réseau radio cellulaire, C-RNTI, du terminal à partir du terminal en utilisant les informations de programmation de liaison montante communes, dans laquelle les informations de commande comprennent un rapport d'état de tampon, BSR.

5. Station de base selon la revendication 4, dans laquelle :
le module d'envoi est en outre configuré pour configurer un identificateur temporaire de réseau radio de groupe, G-RNTI, pour l'équipement d'utilisateur, dans laquelle le G-RNTI représente un RNTI qui est configuré par la station de base et qui correspond aux informations de programmation de liaison montante communes partagées par de multiples équipements utilisateurs ; et
le module d'envoi est spécifiquement configuré pour : brouiller un canal de commande physique de liaison descendante, PDCCH, en utilisant le G-RNTI, et configurer les informations de programmation de liaison montante communes pour l'équipement utilisateur en utilisant le PDCCH brouillé ; ou
envoyer une signalisation de gestion des ressources radio, RRC, à l'équipement utilisateur, dans laquelle la signalisation RRC transporte les informations de programmation de liaison montante communes ; ou
envoyer un message système à l'équipement utilisateur, dans laquelle le message système transporte les informations de programmation de liaison montante communes.

6. Station de base selon la revendication 4 ou 5, dans laquelle :
le module d'envoi est spécifiquement configuré pour : allouer les informations de programmation de liaison montante à l'équipement utilisateur en fonction des informations de commande ;
transporter les informations de programmation de liaison montante et le C-RNTI de l'équipement utilisateur sur un canal partagé physique de liaison descendante, PDSCH, indiqué dans des informations de programmation de liaison descendante ; et
brouiller, en utilisant G-RNTI, le canal de commande physique de liaison descendante, PDCCH, qui transporte les informations de programmation de liaison descendante, et envoyer le PDCCH brouillé à l'équipement utilisateur, dans lequel les informations de programmation de liaison descendante comprennent le PDSCH.

7. Procédé de transmission de données, comprenant de :
envoyer, par un terminal (1102), lorsqu'il est nécessaire d'envoyer des données de liaison montante à une station de base, des informations de commande à la station de base en utilisant une ressource de transmission de liaison montante, dans lequel les informations de commande sont utilisées pour demander à la station de base d'effectuer une programmation de liaison montante pour les données à envoyer du terminal ;
recevoir (1103), par le terminal, des informations de programmation de liaison montante à partir de la station de base pour les informations de commande ; et
envoyer, par le terminal, des données de liaison montante à la station de base en utilisant les informations de programmation de liaison montante,
dans lequel les informations de commande comprennent un rapport d'état de tampon, BSR, et la ressource de transmission de liaison montante comprend des informations de programmation de liaison montante communes ; et
l'envoi d'informations de commande à la station de base en utilisant une ressource de transmission de liaison montante comprend de :
recevoir (1101), par le terminal, les informations de programmation de liaison montante communes, dans lequel les informations de programmation de liaison montante communes comprennent un canal physique partagé de liaison montante, PUSCH, commun, et le PUSCH commun est utilisé pour représenter un PUSCH qui peut être partagé par de multiples terminaux ; et
envoyer, par le terminal, le BSR et un identificateur temporaire de réseau radio cellulaire, C-RNTI, du terminal à la station de base en utilisant les informations de programmation de liaison montante communes.

8. Procédé de transmission de données selon la revendication 7, dans lequel le procédé comprend en outre de :
recevoir, par l'équipement utilisateur, un identificateur temporaire de réseau radio de groupe, G-RNTI, configuré par la station de base, dans lequel le G-RNTI représente un RNTI qui est configuré par la station de base et qui correspond aux informations de programmation de liaison montante communes partagées par de multiples équipements utilisateurs ; et
la réception, par l'équipement utilisateur, d'informations de programmation de liaison montante qui sont renvoyées par la station de base pour les informations de commande comprend de :
recevoir, par l'équipement utilisateur sur un canal de commande physique de liaison descendante, PDCCH, brouillé les informations de programmation de liaison montante qui sont envoyées par la station de base et qui sont pour les informations de commande ;
désembrouiller, par l'équipement utilisateur, le PDCCH brouillé en utilisant le G-RNTI;
lorsque le PDCCH brouillé est reçu avec succès, obtenir, par l'équipement utilisateur, des informations de programmation de liaison descendante à partir du PDCCH brouillé, dans lequel les informations de programmation de liaison descendante indiquent un canal physique partagé de liaison descendante, PDSCH, qui transporte des informations de programmation de liaison montante et un C-RNTI d'équipement utilisateur cible qui utilise les informations de programmation de liaison montante ; et
lorsqu'il est déterminé que le C-RNTI qui est transporté sur le PDSCH et qui est celui de l'équipement utilisateur cible qui utilise les informations de programmation de liaison montante est identique au C-RNTI de l'équipement utilisateur, déterminer, par l'équipement utilisateur, que les informations de programmation de liaison descendante transportées sur le PDSCH sont les informations de programmation de liaison montante de l'équipement utilisateur.

9. Procédé de transmission de données selon la revendication 8, dans lequel l'obtention, par l'équipement utilisateur, des informations de programmation de liaison montante communes envoyées par la station de base comprend de :
obtenir, par l'équipement utilisateur sur le PDCCH brouillé, les informations de programmation de liaison montante communes envoyées par la station de base, dans lequel le PDCCH brouillé est obtenu après le brouillage du PDCCH par la station de base, en utilisant le G-RNTI ; ou
recevoir, par l'équipement utilisateur, une signalisation de gestion des ressources radio, RRC, envoyée par la station de base, dans lequel la signalisation RRC transporte les informations de programmation de liaison montante communes ; ou
recevoir, par l'équipement utilisateur, un message système envoyé par la station de base, dans lequel le message système transporte les informations de programmation de liaison montante communes.

10. Procédé de transmission de données, comprenant de :
recevoir (1202), par une station de base, des informations de commande à partir d'un terminal en utilisant une ressource de transmission de liaison montante, dans lequel les informations de commande sont utilisées pour demander à la station de base d'effectuer une programmation de liaison montante pour des données à envoyer du terminal ;
envoyer (1203), par la station de base, des informations de programmation de liaison montante pour les informations de commande au terminal en fonction des informations de commande ; et
recevoir, par la station de base, des données de liaison montante à partir du terminal en utilisant les informations de programmation de liaison montante,
dans lequel le procédé comprend en outre de :
configurer (1201), par la station de base, des informations de programmation de liaison montante communes pour le terminal, dans lequel les informations de programmation de liaison montante communes comprennent un canal physique partagé de liaison montante, PUSCH, commun, et le PUSCH commun est utilisé pour représenter un PUSCH qui peut être partagé par de multiples terminaux ; et
la réception, par une station de base, d'informations de commande à partir du terminal en utilisant une ressource de transmission de liaison montante comprend de :
recevoir, par la station de base, les informations de commande et un identificateur temporaire de réseau radio cellulaire, C-RNTI, du terminal à partir du terminal en utilisant les informations de programmation de liaison montante communes, dans lequel les informations de commande comprennent un rapport d'état de tampon, BSR;
dans lequel l'envoi, par la station de base, d'informations de programmation de liaison montante pour les informations de commande au terminal en fonction des informations de commande comprend de :
brouiller, par la station de base, en utilisant le C-RNTI du terminal, le canal de commande physique de liaison descendante, PDCCH, qui transporte les informations de programmation de liaison montante, et envoyer le PDCCH brouillé au terminal.

11. Procédé de transmission de données selon la revendication 10, dans lequel le procédé comprend en outre de :
configurer, par la station de base, un identificateur temporaire de réseau radio de groupe, G-RNTI, pour l'équipement utilisateur, dans lequel le G-RNTI représente un RNTI qui est configuré par la station de base et qui correspond aux informations de programmation de liaison montante communes partagées par de multiples équipements utilisateurs ; et
l'envoi, par la station de base, d'informations de programmation de liaison montante communes pour l'équipement utilisateur comprend de :
brouiller, par la station de base, un canal de commande physique de liaison descendante, PDCCH, en utilisant le G-RNTI, et configurer les informations de programmation de liaison montante communes pour l'équipement utilisateur en utilisant le PDCCH brouillé ;
envoyer, par la station de base, une signalisation de gestion des ressources radio, RRC, à l'équipement utilisateur, dans lequel la signalisation RRC transporte les informations de programmation de liaison montante communes ; ou
envoyer, par la station de base, un message système à l'équipement utilisateur, dans lequel le message système transporte les informations de programmation de liaison montante communes.

12. Procédé de transmission de données selon la revendication 10 ou 11, dans lequel l'envoi, par la station de base, d'informations de programmation de liaison montante pour les informations de commande à l'équipement utilisateur conformément aux informations de commande comprend de :
allouer, par la station de base, les informations de programmation de liaison montante à l'équipement utilisateur en fonction des informations de commande ;
transporter, par la station de base, les informations de programmation de liaison montante et le C-RNTI de l'équipement utilisateur sur un canal partagé physique de liaison descendante, PDSCH, indiqué dans les informations de programmation de liaison descendante ; et
brouiller, en utilisant G-RNTI, le canal de commande physique de liaison descendante, PDCCH, qui transporte les informations de programmation de liaison descendante, et envoyer le PDCCH brouillé à l'équipement utilisateur, dans lequel les informations de programmation de liaison descendante indiquent le PDSCH.

13. Produit programme d'ordinateur comprenant des instructions de programme qui, lorsqu'elles sont exécutées par un ordinateur, amènent l'ordinateur à exécuter les étapes du procédé selon l'une quelconque des revendications 7 à 9 ou du procédé selon l'une quelconque des revendications 10 à 12.
